**Europäisches Patentamt**

**European Patent Office**

**Office européen des brevets**

(19)

(11) Veröffentlichungsnummer : **0 370 078 B1**

(12)

# EUROPÄISCHE PATENTSCHRIFT

(45) Veröffentlichungstag der Patentschrift :
**02.12.92 Patentblatt 92/49**

(51) Int. Cl.$^5$ : **B23Q 11/08**

(21) Anmeldenummer : **89903155.3**

(22) Anmeldetag : **08.03.89**

(86) Internationale Anmeldenummer :
**PCT/EP89/00244**

(87) Internationale Veröffentlichungsnummer :
**WO 89/09678 19.10.89 Gazette 89/25**

(54) **TELESKOPABDECKUNG.**

(30) Priorität : **11.04.88 DE 3812035**

(43) Veröffentlichungstag der Anmeldung :
**30.05.90 Patentblatt 90/22**

(45) Bekanntmachung des Hinweises auf die
Patenterteilung :
**02.12.92 Patentblatt 92/49**

(84) Benannte Vertragsstaaten :
**CH DE FR GB IT LI**

(56) Entgegenhaltungen :
**CH-A- 460 461**
**DD-A- 135 462**
**DE-A- 3 711 146**
**DE-A- 3 711 147**
**DE-C- 122 252**

(56) Entgegenhaltungen :
**FR-A- 2 428 189**
**GB-A- 571 629**
**GB-A- 1 073 939**
**US-A- 3 429 356**
**US-A- 3 603 651**

(73) Patentinhaber : **Gebr. Hennig GmbH**
**Dorfstrasse 41**
**W-8045 Ismaning (DE)**

(72) Erfinder : **HENNIG, Kurt**
**Georgensteinstr. 16**
**W-8000 München 71 (DE)**
Erfinder : **STÖHR, Albert**
**Am Wiegenberg 8**
**W-8015 Markt Schwaben (DE)**

(74) Vertreter : **Tetzner, Volkmar, Dr.-Ing. Dr. jur.**
**Van-Gogh-Strasse 3**
**W-8000 München 71 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Teleskopabdeckung entsprechend dem Oberbegriff des Anspruches 1.

Eine Teleskopabdeckung gemäß dem Oberbegriff des Anspruches 1 ist beispielsweise Gegenstand der DE-A- 37 11 147. Die Deckwand und die Seitenwände der einzelnen Abdeckelemente sind hierbei durch Abkanten eines einteiligen Blechzuschnittes hergestellt, wobei die Deckwand und die Seitenwände am vorderen Rand des Abdeckelementes nach innen gerichtete Abkantungen und am hinteren Rand nach außen gerichtete Abkantungen besitzen.

Nun müssen die einzelnen Abdeckelemente derartiger Teleskopabdeckungen vielfach mit Rückwänden, Abstreifern, Gleitern und Rinnen versehen werden, was bei den bekannten Ausführungen oft eine umständliche Fertigung und Montage bedingt.

Der Erfindung liegt daher die Aufgabe zugrunde, eine Teleskopabdeckung entsprechend dem Oberbegriff des Anspruches 1 so auszubilden, daß die Herstellung und Montage vereinfacht werden und die Abdeckelemente auch bei Wahl einer verringerten Wandstärke eine hohe Steifigkeit und Stabilität besitzen.

Diese Aufgabe wird erfindungsgemäß durch das kennzeichnende Merkmal des Anspruches 1 gelöst.

Zweckmäßige Ausgestaltungen der Erfindung sind Gegenstand der Unteransprüche.

Erfindungsgemäß weisen zumindest einzelne Abdeckelemente wenigstens eine rippenartige, im Querschnitt U-förmige Materialverformung auf. Diese Materialverformung kann beispielsweise zur Befestigung einer Rückwand, eines Abstreifers und/oder eines Gleiters dienen. Sie kann ferner eine Rinne zur Abführung von Flüssigkeit, Spänen und anderen Materialien bilden. Sie kann weiterhin zur Längsund-/oder Querversteifung des Abdeckelementes dienen (und zwar entweder ausschließlich oder zusätzlich zu einer der vorstehend genannten Funktionen). Weiterhin kann diese rippenartige, im Querschnitt U-förmige Materialverformung auch ein Verschlußelement für eine im Querschnitt geteilte Abdeckung bilden.

Einige Ausführungsbeispiele der Erfindung sind in der Zeichnung veranschaulicht. Es zeigen

Fig. 1 eine Teil-Längsschnittansicht durch eine erste Ausführungsform der Teleskopabdeckung;

Fig. 2 eine Teil-Längsschnittansicht durch ein Abdeckelement einer zweiten Ausführungsform der Teleskopabdeckung;

Fig. 3 eine Teil-Querschnittsansicht (etwa entsprechend Linie III-III in Fig.1) zur Erläuterung einer anderen Ausgestaltung der Abdeckelemente;

Fig. 4 eine Teil-Aufsicht auf einen rohen, für die Abkantungen vorbereiteten Blechzuschnitt eines Abdeckelements, das an seinem einen Stirnende eine U-förmige Materialverformung erhält;

Fig. 5 und 6 Teil-Schnittansichten des aus dem rohen Blechzuschnitt gemäß Fig. 4 hergestellten Abdeckelements, etwa entsprechend den Schnittlinien V - V in Fig. 4 bzw. VI - VI in Fig. 5;

Fig. 7 eine ähnliche Teil-Aufsicht auf einen rohen Blechzuschnitt für eine abgewandelte Ausführungsform eines Abdeckelements;

Fig. 8 eine Teil-Schnittansicht (Schnittlinie etwa gemäß VIII - VIII in Fig. 7) des aus dem Blechzuschnitt gemäß Fig. 7 hergestellten Abdeckelements;

Fig. 9 eine Teil-Aufsicht auf einen anderen rohen Blechzuschnitt für eine weitere abgewandelte Ausführungsform eines Abdeckelements;

Fig. 10 eine Teil-Schnittansicht des aus dem Blechzuschnitt gemäß Fig. 9 hergestellten Abdeckelements (Schnittlinie X - X in Fig. 9);

Fig. 11 eine Teilansicht eines weiteren rohen Blechzuschnitts für die Herstellung der Deckwand eines anderen abgewandelten Abdeckelements;

Fig. 12 und 13 Teil-Schnittansichten der Deckwand des fertig hergestellten abdeckelements gemäß Fig. 11 (entsprechend den Schnittlinien XII - XII bzw. XIII - XIII in Fig. 11);

Fig. 14 eine Teil-Aufsicht auf einen rohen, für die Abkantungen vorbereiteten Blechzuschnitt eines weiteren Ausführungsbeispieles eines Abdeckelements;

Fig. 15 eine Teil-Schnittansicht des aus dem Blechzuschnitt gemäß Fig. 14 fertig abgekanteten Abdeckelements (etwa Schnittlinie XV-XV in Fig. 14);

Fig. 16 und 17 Teil-Schnittansichten im vergrößerten Maßstab durch zwei einander benachbarte, mit Abstreifern und Anschlägen fertig hergestellte Abdeckelemente (etwa entsprechend Schnittlinien XVI-XVI bzw. XVII-XVII in Fig. 14);

Fig. 18 eine Querschnittsansicht durch ein rohrförmiges Abdeckelement;

Fig. 19 eine Querschnittsansicht einer Abdeckhalbschale von einer Ausführungsvariante des Abdeckelements gemäß Fig. 18;

Fig. 20 eine Teil-Längsschnittansicht entlang der Linie XX-XX in Fig. 19.

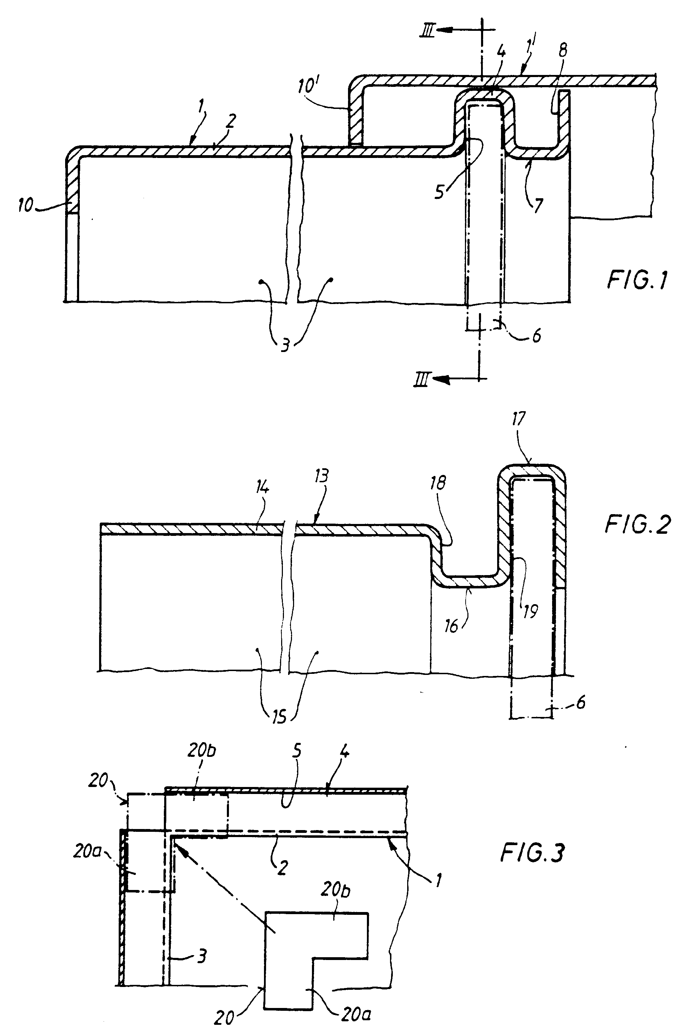

In Fig. 1 ist ein erstes Ausführungsbeispiel der Teleskopabdeckung veranschaulicht, die insbesondere als Schutzabdeckung für Führungsbahnen von Werkzeugmaschinen verwendet und dazu diesen Führungsbahnen entsprechend angepaßt werden kann. Bei der Darstellung in Fig. 1 sind zwei teleskopartig ineinandergebaute Abdeckelemente im Form von im wesentlichen gleichartig ausgebildeten Abdeckkästen 1, 1' dieser Teleskopabdeckung - weitgehend bzw. teilweise - veranschaulicht. Selbstverständlich kann eine beliebige Anzahl solcher Abdeckkästen in Anpassung an die zu schützenden Führungsbahnen zusammengeordnet werden. Dabei kann jeder dieser in Längsrichtung gegeneinander verschiebbaren Abdeckkästen 1, 1' einen entsprechenden Längsabschnitt einer nicht näher veranschaulichten Führungsbahn abdecken und diesen in Querrichtung kastenartig in der erforderlichen Weise umgreifen.

Da jeder dieser Abdeckkästen 1, 1' gleichartig ausgebildet ist, genügt es, den Abdeckkasten 1 näher zu beschreiben. Dieser Abdeckkasten 1 enthält eine Deckwand 2 sowie zwei sich parallel dazu erstreckende, etwa rechtwinklig dazu abgekantete Seitenwände 3.

In dieser Teil-Längsschnittansicht der Fig. 1 besitzt der Abdeckkasten 1 (ebenso alle anderen zugehörigen Abdeckkästen) - in Längsrichtung der Teleskopabdeckung bzw. der Abdeckkästen betrachtetan seinem einen Endabschnitt eine rechtwinklig zur Längsrichtung verlaufende, erste U-förmige Materialverformung 4, die sich im vorliegenden Falle über die ganze Deckwand 2 und die beiden Seitenwände 3 erstreckt und dabei von der Oberseite der Deckwand 2 und der Seitenwände 3 nach außen vorsteht. Die dadurch gebildete Rinne 5 ist zum Innern des Abdeckelements 1 offen, und sie dient zur Aufnahme einer nur strichpunktiert angedeuteten Rückwand 6 für diesen Abdeckkasten 1 (ggf. unter Ausbildung einer Abdichtzone).

Urmittelbar angrenzend an die erste Materialverformung 4 ist an diesem Endabschnitt des Abdeckkastens 1 noch eine zweite rippenartige, im Querschnitt U-förmige Materialverformung 7 vorgesehen, die ebenfalls unter Ausbildung einer zweiten offenen Rinne 8 gestaltet sein kann, wobei diese zweite Materialverformung 7 den stirnseitigen Endabschluß dieses Abdeckkastens 1 bildet. Beide Materialverformungen 4 und 7 können etwa den gleichen oder auch einen unterschiedlichen Rinnenquerschnitt besitzen und sich parallel zueinander quer über die Deckwand 2 und die beiden Seitenwände 3 erstrecken, wobei jedoch die durch die zweite Materialverformung 7 gebildete zweite Rinne 8 nach außen offen ist. Diese zweite Rinne 8 kann dabei zur Abführung von Flüssigkeit, Spänen und dgl., im Bedarfsfalle jedoch auch zur Aufnahme von Abstreif- und/oder Gleitelementen dienen.

Im Bedarfsfalle kann an dem zweiten Abdeckkasten-Endabschnitt, der dem ersten Abschnitt mit den beiden Materialverformungen 4 und 7 gegenüberliegt, wenigstens eine weitere rechtwinklig zur Längsrichtung des Abdeckkastens 1 verlaufende, U-förmige Materialverformung in geeigneter Weise vorgesehen sein.

An diesem zweiten Endabschnitt des Abdeckkastens 1, 1' (und gleichartig auch an den weiteren Abdeckkästen) ist im vorliegenden Ausführungsbeispiel am äußersten Stirnende eine Endabkantung in Form eines Flansches 10 bzw. 10' vorgesehen, die rechtwinklig zu Längsrichtung des Abdeckkastens verläuft und sich zumindest über die ganze Breite der Deckwand 2, vorzugsweise jedoch auch über die ganze Höhe der Seitenwände 3 erstrecken kann. Diese Endflansche 10, 10' können als stirnseitiger Abschluß, zur Aufnahme von Gleitern oder Abdichtelementen oder auch als Endanschläge dienen, und zwar im Zusammenwirken mit jeweils von der Oberseite vorstehenden U-förmigen Materialverformungen am ersten Ende des jeweils darunterliegenden Abdeckkastens, wie es sich beispielsweise aus Fig. 1 ohne weiteres erkennen läßt (Zusammenwirken etwa des Flansches 10' vom Abdeckkasten 1' mit der Materialverformung 4 des darunterliegenden Abdeckkastens 1).

Alle im Querschnitt U-förmigen Materialverformungen können vorzugsweise durch eine Mehrfachabkantung (wie veranschaulicht) gebildet sein.

Die zuvor anhand Fig. 1 erläuterte erste Ausführungsform der Abdeckkästen 1, 1' bzw. der Teleskopabdeckung ist besonders gut für einen Zusammenbau der Teleskopabdeckung geeignet, wenn die einzelnen Abdeckkästen 1, 1' von rückwärts, d. h. von den ersten Endabschnitten her (mit den beiden Materialverformungen 4 und 7) ineinandergeschoben werden sollen.

Ein zweites Ausführungsbeispiel sei anhand eines in der Teil-Längsschnittansicht veranschaulichten Abdeckkastens 13 gemäß Fig.2 erläutert. Dieser Abdeckkasten 13 kann gleichartig wie im ersten Ausführungsbeispiel aus einer Deckwand 14 und zwei etwa rechtwinklig dazu abgekanteten Seitenwänden 15 bestehen.

In diesem Falle sind am rückwärtigen ersten Endabschnitt des Abdeckkastens 13 zwar wiederum zwei unmittelbar aneinander angrenzende, rechtwinklig zur Längsrichtung verlaufende, U-förmige Materialverformungen, nämlich eine erste Materialverformung 16 und eine zweite Materialverformung 17, jeweils unter Ausbildung einer offenen Rinne, nämlich einer ersten Rinne 18 bzw. einer zweiten Rinne 19, vorgesehen. Hiervon ragt die erste Materialverformung 16 in das Innere des Abdeckkastens 13 hinein und besitzt eine nach der Außenseite hin offene erste Rinne 18, während die unmittelbar am Stirnende vorgesehene zweite Materialverformung 17 nach der Außenseite des Abdeckkastens 13 hin vorsteht und eine zum Abdeckkasteninnern offene zweite Rinne 19 besitzt. Diese zweite Materialverformung 17 bzw. ihre zweite Rinne 19 dient in diesem Falle zur Aufnahme einer nur strichpunktiert angedeuteten Rückwand 6, während die weiter innen liegende erste Rinne 18 der ersten Materialverformung 16 wiederum als Abführrinne für Flüssigkeit und Späne dienen kann.

Der dem ersten Endabschnitt mit den beiden Materialverformungen 16 und 17 entgegengesetzte zweite Endabschnitt dieses Abdeckkastens 13 ist vorzugsweise gerade auslaufend, d. h. ohne irgend eine Materialverformung ausgebildet. Im Bedarfsfalle kann an diesem gerade auslaufenden Endabschnitt jedoch ein geeigneter Abstreifer, beispielsweise ein an sich bekannter C-förmiger Abstreifer mit Puffer oder dergleichen angebracht werden.

Diese in Fig. 2 veranschaulichte Ausführungsform eines Abdeckkastens 13 eignet sich besonders gut für Teleskopabdeckurgen, bei denen die einzelnen Abdeckkästen von vorn, also von dem gerade auslaufenden zweiten Endabschnitt, ineinandermontiert werden sollen.

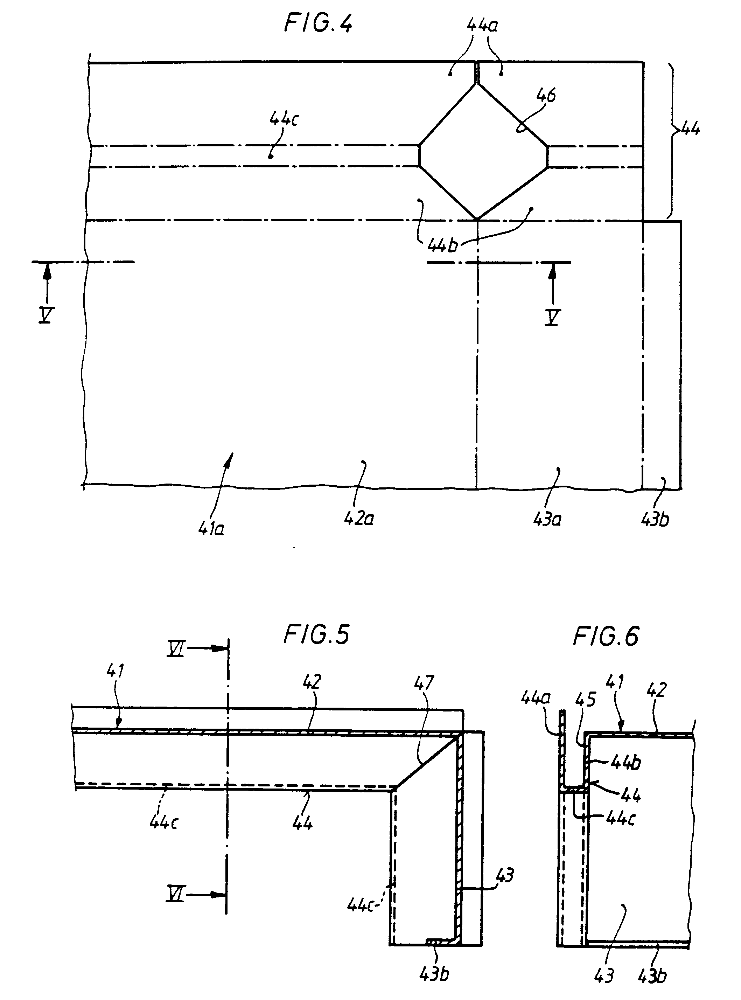

Gemäß Fig. 3 soll anhand einer Ausführungsvariante, etwa der Fig. 1, erläutert werden, wie ein Abdeckkasten im Bereich seiner Ecken besonders abgedichtet und versteift werden kann. Der Einfachheit halber sei angenommen, daß in dieser Fig. 3 der Abdeckkasten 1 gemäß Fig. 1 in einer Teil-Querschnittsansicht im Bereich der ersten Materialverformung 4 dargestellt ist. Die durch die erste U-förmige Materialverformung 4 gebildete, zum Innern des Abdeckelements 1 hin offene erste Rinne 5 dient in diesem Falle nicht - wie in Fig.1 - zur Aufnahme einer Rückwand, sondern in die Eckbereiche zwischen der Deckwand 2 und den jeweils angrenzenden Seitenwänden 3 sollen je ein Winkelstück 20 eingesetzt werden. Dieses Winkelstück besitzt eine Dicke, die etwa der lichten Weite der ersten Rinne 5 entspricht, und es besitzt zwei im wesentlichen gleich lange Schenkel 20a und 20b, von denen der eine Schenkel 20b im Deckwandabschnitt der ersten Rinne 5 und der andere Schenkel 20a im Seitenwandabschnitt der ersten Rinne 5 passend aufgenommen wird, wie strichpunktiert in Fig. 3 eingezeichnet ist. Dieses Winkelstück 20 kann dabei mit seinen Schenkeln 20a und 20b fest in die entsprechenden Abschnitte der ersten Rinne 5 eingeschweißt oder auch nur eingeklemmt sein. Während sich bei der ersten Befestigungsart sowohl eine zuverlässige Abdichtung als auch eine gute Versteifung des Abdeckkastens 1 ergibt, führt die zweite Befestigungsart des Winkelstückes 20 (Festklemmen) im wesentlichen nur zu einer Abdichtung des Abdeckkastens 1.

Es versteht sich ferner von selbst, daß die Anbringung eines solchen Winkelstückes 20 auch bei anderen geeigneten Ausführungen der Materialverformungen, beispielsweise bei der zweiten Materialverformung 17 gemäß Fig. 2, Verwendung finden kann, und es versteht sich ebenfalls von selbst, daß - anders als bei den Fig. 1 und 2 - zwei unmittelbar aneinander angrenzende oder mit Abstand voneinander quer verlaufende Materialverformungen beide nach innen offene Rinnen bilden können, wobei in der Rinne der einen Materialverformung eine Rückwand und in der Rinne der anderen Materialverformung eine Eckverbindung nach Art der Winkelstücke 20 aufgenommen werden kann.

Es bei an dieser Stelle erwähnt, daß im Bedarfsfalle zumindest einige Abdeckkästen der Teleskopabdeckung in ihrer Deckwand wenigstens eine in Längsrichtung der Teleskopabdeckung verlaufende, weitere U-förmige Materialverformung, etwa als Längsversteifungsrippe, aufweisen können. Eine solche längsverlaufende U-förmige Materialverformung ist - wegen der leichten Vorstellbarkeit - in der Zeichnung nicht näher veranschaulicht; sie kann in jeweils passender Weise sowohl im Bereich der Längsmitte der Deckwand als auch im Seitenbereich der Deckwand eingearbeitet sein.

Anhand der Fig. 4 - 17 sei nun an einigen Beispielen erläutert, wie jedes Abdeckelement etwa in Form eines sich in Längsrichtung der Teleskopabdeckung erstreckenden Troges ausgebildet und dabei aus einem einzigen Blechzuschnitt mit einer Deckwand und zwei winklig zur Deckwand abgekanteten Seitenwänden hergestellt sein kann. Hierbei sei der Einfachheit halber jeweils angenommen, daß nur an einem Endabschnitt, und zwar jeweils nur am unmittelbaren stirnseitigen Ende des zugehörigen Abdeckkastens eine durch Mehrfachabkantung ausgebildete U-förmige Materialverformung vorgesehen ist, die jedoch ebenfalls aus diesem einzigen Blechzuschnitt bei den Mehrfachabkantungen hergestellt wird.

Anhand der Fig. 4 - 6 sei zunächst ein erstes Beispiel für die Herstellung eines einzigen, wiederum als Abdeckkasten bezeichneten Abdeckelements 41 beschrieben.

Wie die Teil-Schnittansichten in den Fig. 5 und 6 erkennen lassen, besitzt der durch mehrfaches Abkanten hergestellte Abdeckkasten 41 eine Deckwand 42 und zwei Seitenwände 43 (von denen nur eine veranschaulicht ist) sowie eine am Stirnende ausgebildete, rechtwinklig zur Längsrichtung des Abdeckkastens verlaufende, U-förmige Materialverformung 44. Diese Materialverformung 44 ragt in das Innere des Abdeckkastens 41 hinein und bildet eine Rinne 45, die bei diesem Beispiel sich über die ganze Deckwand 42 und die beiden Seitenwände 43 fortlaufend erstreckt. Die äußerste Stirnseite dieses Abdeckkastens 41 wird dabei von dem äußeren flanschartigen Stegteil 44a der Materialverformung 44 gebildet, der sich nach oben und seitlich über die Ebene der Deckwand 42 bzw. der Seitenwände 43 erstreckt, wie die Fig. 4 und 5 erkennen lassen.

In Fig. 4 ist die Aufsicht auf den abgewickelten Abdeckkasten 41 (gemäß Fig. 5 und 6), also der rohe Blechzuschnitt dieses Abdeckkastens 41 zu sehen. Dieser mit 41a bezeichente rohe Blechzuschnitt ist in Fig. 4 in einem Zusand kurz vor den durchzuführenden Abkantungen für die Formgebung zum Abdeckkasten 41 veranschaulicht, d. h. sind dort strichpunktiert die Biege- bzw. Knicklinien und in vollen Linien die Schnitt- bzw. Ausklinkungskanten veranschaulicht. In bezug auf die Darstellungen des fertigen Abdeckkastens 41 in den Fig. 5 und 6 enthält demnach der rohe Blechzuschnitt 41a der Fig. 4 folgende Abschnitte: den Deckwandabschnitt 42a, einen der Seitenwandabschnitte 43a mit einem zusätzlichen Abwicklungsabschnitt 43b (zum Untergreifen einer Führungsbahn oder dgl.; siehe hierzu auch Fig 5 und 6) sowie ferner den über die Abschnitte 42a und 43a verlaufenden Abschnitt für die zu bildende Materialverformung 44 mit dem erhöhten Stegteil 44a, dem inneren Stegteil 44b und dem zu bildenden Rinnenboden 44c.

Im Bereich des die U-förmige Materialverformung 44 zu bildenden Endabschnittes vom rohen Blechzuschnitt 41a ist eine Ausklinkung 46 in einer solchen Form und Größe vorgesehen, daß nach Herstellung aller Abkantungen wenigstens einige der Ausklinkungskanten zur Bildung einer Eckverbindung stumpf aneinanderliegen.

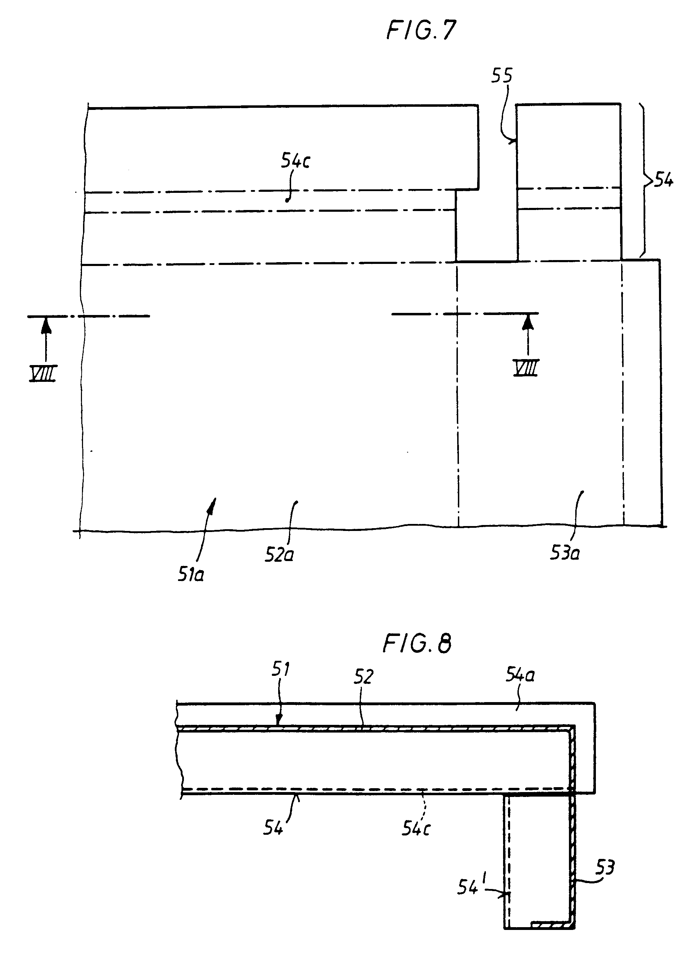

Betrachtet man in diesem Sinne konkret den Blechzuschnitt 41a in Fig. 4, dann besitzt der rohe Blechzuschnitt 41a in jedem Übergangsbereich von der Deckwand 42 bzw. 42a zu einer der Seitenwände 43 bzw. 43a der dabei zu bildenden Materialverformung 44 eine dem Verlauf und der Rinne 45 angepaßte Materialausklinkung 46, deren sich jeweils entsprechend gegenüberliegenden Ausklinkungskanten (in Fig. 4) nach Fertigstellung aller notwendigen Abkantungen stumpf aneinanderliegen (und in diesem Zustand zweckmäßig aneinandergeschweißt sind). Auf diese Weise führen Form und Größe der Ausklinkung 26 gemäß Fig. 4 zu einem durch Mehrfachabkantungen gebildeten Abdeckkasten 41 gemäß den Fig. 5 und 6, wobei Fig. 5 zeigt, daß die fertige U-förmige Materialverformung 44 im Übergangsbereich von der Deckwand 42 zu den Seitenwänden 43 eine Eckverbindung besitzt, bei der die entsprechenden Ausklinkungskanten auf einer Gehrungslinie 47 stumpf aneinanderstoßen, wodurch die gebildete Rinne 45 ununterbrochen (fortlaufend) sich über die Deckwand 42 und die beiden Seitenwände 43 erstreckt. Für ein zweites Herstellungsbeispiel eines Abdeckkastens 51 zeigen Fig. 7 wiederum den für die nachfolgende Mehrfachabkantung vorbereiteten rohen Blechzuschnitt 51a und Fig. 8 eine Teilquerschnittsansicht des fertig abgekanteten Abdeckkastens 51. Dieser Abdeckkasten enthält gemäß Fig. 8 wiederum eine Deckwand 52 und zwei rechtwinklig nach unten abgebogene Seitenwände 53 (hiervon ist wiederum nur eine veranschaulicht, während die andere spiegelbildlich dazu ausgeführt sein kann). Ferner besitzt dieser Abdeckkasten 51 an seinem einen Stirnende eine wiederum im Querschnitt U-förmige Materialverformung 54, die sich in diesem Falle zunächst einmal quer über die ganze Deckwand 52 erstreckt und dabei durch die Seitenwände 53 offen ausmündet. An den beiden Seitenwänden 53 dieses Abdeckkastens 51 ist je ein im Querschnitt gleich großer, durch die Materialverformung 54 gebildeter Rinnenabschnitt 54′ wie in der Deckwand 52 ausgebildet. Hierbei stoßen die Rinnenabschnitte 54′ in den beiden Seitenwänden 53 dann - wie Fig. 8 erkennen läßt - stumpf gegen die Unterseite vom Rinnenboden 54c des in der Deckwand 52 vorgesehenen Rinnenabschnittes. Der Querschnitt dieser U-förmigen Materialverformung 54 kann genau gleichartig ausgebildet sein wie die Materialverformung 44 in Fig. 6, also auch mit einem sich über die Ebenen der Deckwand 52 und der Seitenwände 53 hinaus nach außen erstreckenden äußeren Stegteil 54a.

Um auch bei dieser in Fig. 8 dargestellten Ausführungsform des Abdeckkastens 51 im einteiligen Blechzuschnitt 51a gemäß Fig. 7 alle Abkantungen und dabei auch die erforderliche Eckverbindung im Übergangsbereich von der Deckwand 52 zu den entsprechenden Seitenwänden 53 bei der U-förmigen Materialverformung 54 voll berücksichtigen zu können, ist auch hier eine in Form und Größe passende Materialausklinkung 55 so vorgesehen, daß beim fertig abgekanteten Abdeckkasten 51 entsprechende Ausklinkungskanten zumindest teilweise aneinanderstoßen bzw. - hier vor allem - eine zweckmäßige Abstützung entsprechender Materialverformungsteile bilden können.

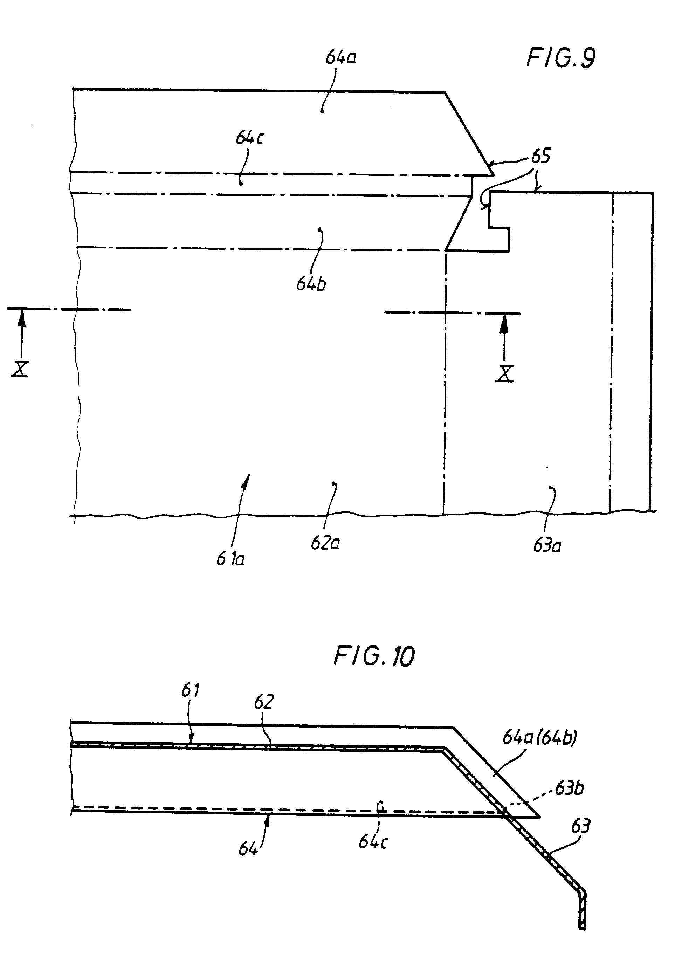

Während bei den vorherigen Ausführungsbeispielen die Seitenwände gegenüber den Deckwänden des jeweiligen Abdeckkastens etwa rechtwinklig abgekantet sind, zeigen Fig. 9 und 10 ein Beispiel von einem weiteren Abdeckkasten 61, bei dem zumindest eine Seitenwand 63 gegenüber der Deckwand 62 unter schrägem Verlauf abgekantet ist, d. h. in der Darstellung des fertigen Abdeckkastens 61 gemäß Fig. 10 ist die Seitenwand 63 aus der Ebene der Deckwand nur um etwa 45° nach unten abgekantet (unter Ausbildung einer Art Dachform in diesem Bereich zwischen Deckwand 62 und Seitenwand 63).

Der hierfür erforderliche rohe Blechzuschnitt 41a ist in der Aufsicht in Fig. 9 dargestellt. Dabei soll die im Querschnitt wiederum U-förmige Materialverformung 64 (mit gleichem Querschnitt wie etwa Fig. 6) eine nach außen offene Rinne bilden, die jedoch im vorliegenden Falle nur quer über die ganze Deckwand 62 verläuft und dabei durch die Seitenwände 63 offen ausmündet. Hierbei soll die aus den Seitenwandabschnitten 64a und 64b sowie dem Boden 64c gebildete Materialverformung 64 sich an ihren Enden in einer entsprechend geformten Ausnehmung 63b in der Seitenwand bzw. den Seitenwänden 63 abstützen. Um dies von vornherein bei der Herstellung des rohen Blechzuschnittes 61a berücksichtigen zu können, weist der rohe Blechzuschnitt 61a wiederum im den entsprechenden Übergangsbereichen vom Deckwandzuschnitt 62a zu den Seitenwandabschnitten 63a bzw. den Eckverbindungen der Materialverformung 64 angepaßte Ausklinkungen 65 (Fig. 9) auf.

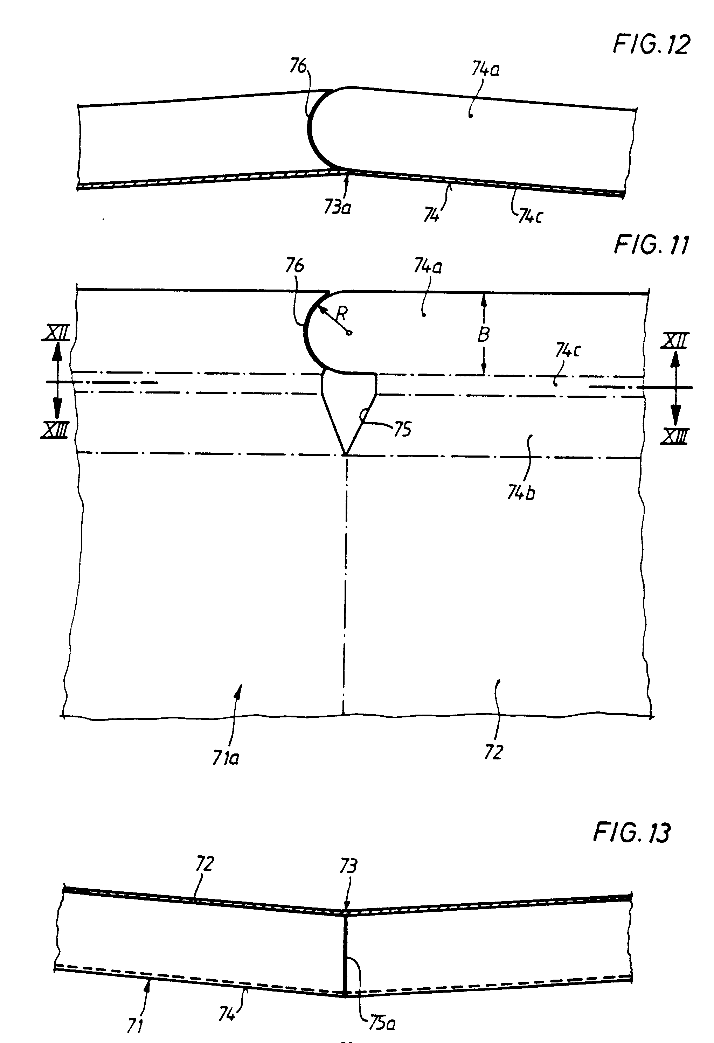

In den Fig. 11 - 13 ist in einer - abgewickelten - Aufsicht sowie in zwei Teilschnitten jeweils nur ein Teil eines Endabschnittes einer noch zusätzlich verformten Deckwand 72 eines abgewandelten Abdeckkastens 71 veranschaulicht. Quer über diesen Abdeckkasten 71 bzw. die veranschaulichte Deckwand 72 verläuft wiederum - in gleichartiger Formgebung wie bei den vorherigen Beispielen - eine im Querschnitt U-förmige Materialverformung 74. Die Deckwand 72 soll in diesem Falle etwa in ihrem mittleren Querbereich eine in Längsrichtung der Abdeckung bzw. des Abdeckelements 71 verlaufende, dachfirstartige Krickung 73 aufweisen (vgl. Querschnittsansicht in Fig. 13), wobei eine gleich große Abknickung 73a auch im Bereich der Materialverformung 74, insbesondere von deren Boden 74c vorgesehen sein soll.

Um die zuvor erwähnte dachfirstartige Abknickung 73 auch - bei 73a - gleichartig bei der U-förmigen Materialverformung 74 durchführen zu können, erhält der rohe Blechzuschnitt 71a an dem für die Ausbildung der U-förmigen Materialverformung 74 vorgesehenen Ende im Bereich der hier auszubildenden Rinne eine - im Vergleich zu den Beispielen der Fig. 4 - 10 - weitere Materialausklinkung 75, die dem Abknickungsverlauf dieses mittleren Rinnenabschnittes angepaßt ist. Betrachtet man den rohen Blechzuschnitt 71a in Fig. 11, dann erkennt man, daß die Materialausklinkung 75 nur im mittleren Bereich des inneren Seitenwandabschnittes 74b und des Bodens 74c der zu bildenden Materialverformung 74 vorgesehen ist. Im mittleren Bereich des äußeren Seitenwandabschnittes 74a der zu bildenden Materialverformung 74 ist nur ein etwa halbkreisförmiger Trennschnitt 76 mit einem Radius R vorgenommen, der der halben Breite B dieses äußeren Seitenwandabschnittes 74a entspricht.

Wird nun der in der zuvor beschriebenen Weise vorbereitete rohe Blechzuschnitt 71a (Fig. 11) unter Ausbildung der dachfirstartigen Abknickung 73 entsprechend abgekantet, unter gleichzeitiger Abkantung und Ausbildung der U-förmigen Materialverformung 74, dann erhält die Deckwand 72 des fertigen Abdeckkastens die in den Fig. 12 und 13 dargestellten Querschnittsformen und hieraus läßt sich erkennen, daß die sich im rohen Blechzuschnitt 71a mit Abstand gegenüberliegenden entsprechenden Ausklinkungskanten im fertig abgebogenen bzw. abgekanteten Zustand des Abdeckkastens 71 stumpf gegenüberliegen (vgl. z. B. Stoßkanten 75a in Fig. 13). Im mittleren Bereich des äußeren Seitenwandabschnittes 74a der Materialverformung 74 sind die sich gegenüberliegenden Trennkanten durch das dachförmige Abbiegen der Deckwand 72 nur an ihren Umfangsrändern relativ zueinander verschoben, was durch die gewählte halbkreisförmige Form des Trennschnittes 76 möglich ist, wie sich durch einen Vergleich der Darstellungen dieses äußeren Seitenwandabschnittes 74a in den Fig. 11 und 12 ohne weiteres erkennen läßt.

Zu den Ausführungsarten eines Abdeckelements, das an seinem einen Ende eine einzige, nach innen vorstehende, U-förmige Materialverformung mit nach außen offener Rinne, etwa gemäß den Beispielen der Fig. 4 - 13, aufweist, sei noch erwähnt, daß eine dort etwa anzubringende Rückwand beispielsweise flächig am jeweils inneren Seitenwandabschnitt (z. B. 44b in Fig. 6) der zugehörigen Materialverformung angebracht sein kann; in gleicher Weise könnte auch ein nach innen ragendes Gleitelement angebracht sein.

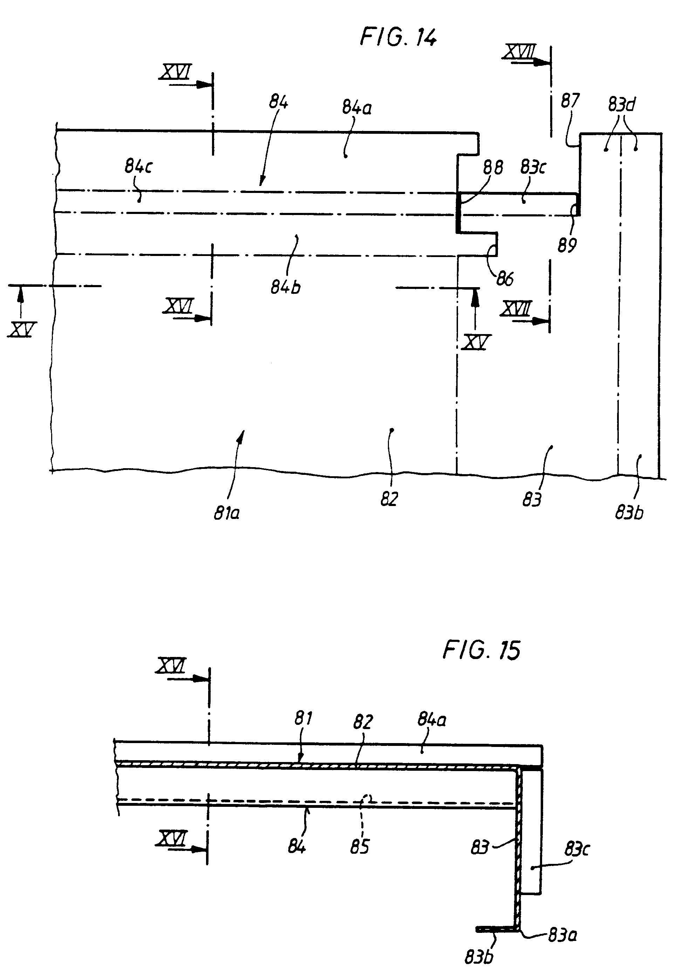

Ein weiteres Ausführungsbeispiel eines Abdeckelements sei zunächst anhand der Fig. 14 und 15 erläutert, wobei die Fig. 14 eine Teil-Aufsicht auf einen für die Mehrfachabkantung vorbereiteten rohen (abgewickelten) Blechzuschnitt 81a und Fig. 15 einen entsprechenden Teil-Querschnitt eines aus diesem Blechzuschnitt 81a fertig abgekanteten Abdeckkastens(Abdeckelement) 81 darstellen.

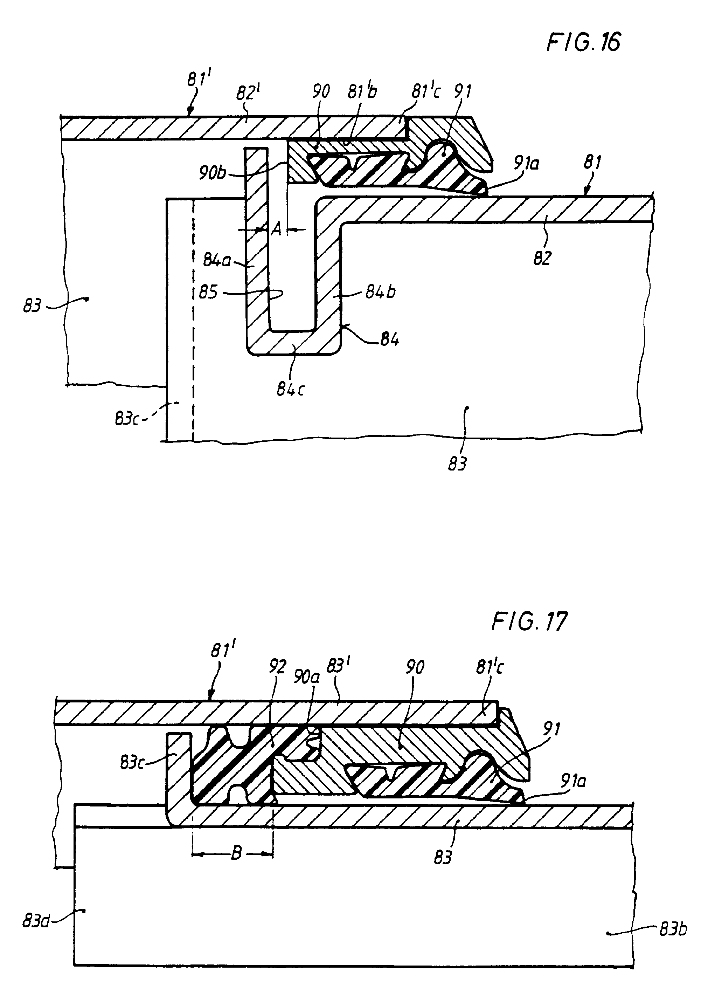

Auch dieser Abdeckkasten 81 ist ihn Form eines sich in Längsrichtung der Teleskopabdeckung erstreckenden Troges ausgebildet und aus dem einzigen Blechzuschnitt 81a durch entsprechende Mehrfachabkantungen hergestellt. Dieser Abdeckkasten 81 besitzt somit wiederum eine Deckwand 82, zwei rechtwinklig von dieser Deckwand 82 - nach unten - abgebogene Seitenwände 83 (von denen nur die eine in Fig. 15 dargestellt ist, während die andere spiegelbildlich dazu vorgesehen ist) sowie eine an einem Ende (Stirnende) des Abdeckkastens vorgesehene U-förmige Materialverformung 84, die von der Deckwand 82 zum Innern dieses Abdeckelements 81 hin vorsteht, eine nach außen offene Rinne 85 bildet und dabei einen die Stirnseite an diesem Stirnende des Abdeckelements 81 bildenden Stegflansch 84a aufweist, der - wie in den Fig. 15 und 16 veranschaulicht - über die Deckwand 82 dieses Abdeckelements 81 nach außen vorragt. Die beiden Seitenwände 83 dieses Abdeckkastens 81 weisen an ihren der Deckwand 82 abgewandten unteren freien Rändern 83a einen zum Innern dieses Abdeckkastens - vorzugsweise rechtwinkligabgebogenen unteren Schenkel 83b auf, der eine hier nicht veranschaulichte, entsprechend geformte Führungsbahn untergreifen kann.

Die beiden Seitenwände 83 weisen an dem mit der Materialverformung 84 versehenen hinteren Stirnende dieses Abdeckkastens 81 je einen etwa rechtwinklig nach außen abgekanteten Anschlagflansch 83c auf, dessen Bedeutung später noch insbesondere im Zusammenhang mit der Fig. 17 erläutert wird.

Weiterhin besitzen diese beiden Seitenwände 83 dieses Abdeckkastens 81 ebenfalls an ihren mit den Anschlagflanschen 83c versehenen Stirnenden (die der Teleskop-Auszugsrichtung entgegengerichtet sind) sowie im Bereich ihrer unteren freien Ränder 83a je einen geradlinig von diesen Stirnwänden rückwärts weisenden Führungsvorsprung 83d, wie er in Fig. 17 angedeutet und in Fig. 14 - abgewickelt - im rohen Blechzuschnitt 81a zu erkennen ist. Jeder Führungsvorsprung 83d erstreckt sich nur über einen kleinen Teil der Höhe der zugehörigen Seitenwand 83, und er ist ebenfalls durch eine entsprechende winklige Abkantung des rohen Blechzuschnitts 81a hergestellt (jeder Führungsvorspruch 83d besitzt etwa die Größe und Querschnittsform wie der in Fig. 15 zu erkennende untere, winkelförmige Abschnitt der Seitenwand 83 unterhalb des Anschlagflansches 83c, d. h. mit dem unteren Schenkel 83b).

Die Querschnittsform der durch eine entsprechende Mehrfachabkantung (rechtwinklige Abkantungen) hergestellten, U-förmigen Materialverformung 84 läßt sich besonders gut in Fig. 16 erkennen. Danach besitzt diese Materialverformung 84 neben dem bereits erwähnten stirnseitigen Stegflansch 84a eine innere Stegwand 84b sowie einen den Stegflansch 84a und die Stegwand 84b verbindenden Boden 84c, der gleichzeitig den geschlossenen Rinnenboden für die Rinne 85 bildet.

Bei diesem Ausführungsbeispiel gemäß den Fig. 14 - 17 erstreckt sich die durch die Materialverformung 84 gebildete Rinne 85 nur quer über die ganze Breite der Deckwand 82, wobei sie durch die Seitenwinde 83 jeweils offen ausmündet.

Betrachtet man nochmals die abgewickelte Darstellung des für die Mehrfachabkantungen vorbereiteten rohen Blechzuschnittes 81a in Fig. 14, dann kann man dort die strichpunktiert dargestellten Knicklinien für die vorzunehmenden Mehrfachabkantungen erkennen., wobei diese Knicklinien jeweils die Wände, Flansche, Schenkel usw. des fertig abgekanteten Abdeckkastens 81 begrenzen, weshalb die im rohen Blechzuschnitt 81 durch die Knicklinien eingegrenzten Abschnitte dieses Blechzuschnittes 81a jeweils mit den Bezugszeichen versehen sind, die im fertigen Abdeckkasten 81 für die entsprechenden Wände, Flansche und Schenkel verwendet worden sind.

In diesem rohen Blechzuschnitt 81 (Fig. 14) kann man ferner erkennen, daß im Übergangsbereich von der Deckwand 82 zu einer Seitenwand 83 des zu bildenden Abdeckkastens 81 sowie im Bereich der auszubildenden Materialverformung 84 eine erste Materialausklinkung 86 und eine zweite Materialausklinkung 87 vorgesehen sind. Die erste Materialausklinkung 86, die direkt in der Seitenwand 83 angebracht ist, entspricht dem lichten Querschnitt der durch die Materialverformung 84 zu bildenden Rinne 85 und somit der Mündungsöffnung der durch diese Seitenwand 83 offen ausmündenden Rinne 85.

Die zweite Materialausklinkung 87 ist ebenfalls in jeder Seitenwand 83 vorgesehen, mündet aber offen zum stirnseitigen Ende der jeweiligen Seitenwand 83 aus, wobei an der jeweiligen Berührungslinie zwischen dem Seitenwandabschnitt und dem Deckwandabschnitt im Bereich der zu bildenden Materialverformung 84 ein durchgehender Trennschnitt 88 zwischen der ersten Materialausklinkung 86 und der zweiten Materialausklinkung 87 vorgesehen ist. Ein zweiter Trennschnitt 89 liegt dem ersten Trennschnitt 88 im Bereich des zu bildenden Schenkels 83b bzw. des zu bildenden Führungsvorsprunges 83d der Seitenwand 83 gegenüber und erstreckt sich lediglich über die Breite des zu bildenden Anschlagflansches 83c.

Ein Blick auf den nur als Teil-Ansicht in Fig. 14 dargestellten rohen Blechzuschnitt 81a läßt im Eckbereich erkennen, daß dieser rohe Blechzuschnitt 81a aus einem vollkommen rechteckigen Blechtafel-Zuschnitt mit nur äußerst geringem Abfall (durch die beiden kleinen Materialausklinkungen 86 und 87) hergestellt werden kann.

Vergleicht man nun den zuvor beschriebenen, für die Mehrfachabkantungen vorbereiteten rohen Blechzuschnitt 81a gemäß Fig 14 mit dem fertig abgekanteten Abdeckkasten 81 bzw. den in größerem Maßstab dargestellten Teil-Schnittansichten gemäß Fig. 16 und 17, dann läßt sich einerseits die leichte Herstellbarkeit eines solchen Abdeckkastens einschließlich seiner U-förmigen Materialverformung 84 sowie der zusätzlichen unteren Schenkel 83b, Anschlagflansche 83c und Führungsvorsprünge 83d erkennen. Dabei ergibt sich insbesondere aus Fig. 16, daß der Anschlagflansch 83c an dem entsprechenden Stirnende jeder Seitenwand 83 gegenüber dem Stegflansch 84a, der ja gleichzeitig gewissermaßen die entsprechende Stirnseite der Deckwand 82 bildet, in Längsrichtung des Abdeckkastens 81 sowie in Rückwärtsrichtung etwas vorsteht. In gleicher Weise kann man auch in Fig. 17 erkennen, daß - wie bereits weiter oben angedeutet - der Führungsvorsprung 83d jeder Seitenwand 83 gegenüber dem Anschlagflansch 83c wiederum noch weiter in Rückwärtsrichtung vorsteht.

Durch diese Art des vorbereiteten rohen Blechzuschnittes 81a (mit den Ausklinkungen 86, 87, den Trennschnitten 88, 89 sowie mit den strichpunktiert angedeuteten Knicklinien) läßt sich im Vergleich zu den Schnittansichten des fertig abgekanteten Abdeckkastens 81 auf besonders einfache Weise auch der Verlauf und auch der Querschnitt der auszubildenden Rinne 85 genau vorher festlegen, wobei die Ausklinkungskanten nach Herstellung der Mehrfachankantungen zumindest teilweise unter Bildung einer verschweißbaren Eckverbindung aneinanderliegen.

Insbesondere anhand der Fig. 1,6 und 17 sei nachfolgend erläutert, wie die Abdeckkästen einer ganzen Teleskopabdeckung mit Abstreifern und Begrenzungsanschlägen für die Auszugsbewegung bzw. die Einschubbewegung der ganzen Teleskopabdeckung ausgestattet sein können. Hierzu sind in den Fig. 16 und 17 lediglich jeweils zwei einander benachbarte, zusammenwirkende Abdeckkästen in vergrößerten Teil-Schnittansichten sowie im voll ausgezogenen Zustand veranschaulicht, wobei beide Abdeckkästen der zuvor insbesondere anhand der Fig. 14 und 15 (sowie teilweise auch dieser Fig. 16 und 17) beschriebenen Ausführungsform hergestellt sein können, weshalb der kleinere Abdeckkasten mit 81 und der darauf teleskopartig verschiebbare, nächstgrößere Abdeckkasten mit 81' bezeichnet ist.

Demnach trägt der über dem kleineren (nächstkleineren) Abdeckkasten 81 angeordnete Abdeckkasten 81' an der Unterseite 81'b seines der Materialverformung entgegengesetzten vorderen Stirnendes 81'c einen in einer starren Befestigigungsleiste 90 auswechselbar gehalterten, elastischen Abstreifer 91, der sich quer über die Innenseiten der Deckwand 82' und - fortlaufend oder in Längsrichtung versetzt - der beiden Seitenwande 83' erstreckt. Dieser Abstreifer 91 weist eine schräg nach vorn-unten frei vorstehende Abstreiflippe 91a auf, die mit den Außenseiten der Deckwand 82 und der entsprechenden Seitenwände 83 des kleineren Abdeckelements 81 in Gleitberührung steht, um bei der Einzugsbewegung der Abdeckkästen 81, 81' bzw. der Teleskopabdeckung evtl. an den Außenseiten des jeweils nächstkleineren Abdeckelements anhaftende Späne, Verschmutzungen oder dgl. abstreifen zu können. Diese Abstreifer 91 mit ihren starren Befestigungsleisten 90 sind hinreichend bekannt und können in jeder geeigneten Ausführung verwendet werden, so daß sich eine weitere Beschreibung dieser Elemente erübrigt.

Wie sich vor allem Fig. 17 entnehmen läßt, sind an den Innenseiten der beiden Seitenwände 83' des größeren (jeweils nächstgrößeren) Abdeckelements 81' sowie ummittelbar an den der Abstreiflippe 91a entgegengesetzten rückwärtigen Kanten 90a der entsprechenden Abschnitte der starren Befestigungsleiste 90 elastische Pufferelemente 92 befestigt. Diese elastischen Pufferelemente 92 können in ihrer Höhe etwa dem lichten Abstand zwischen den entsprechenden Seitenwänden 83, 83' der jeweils benachbarten Abdeckkästen 81, 81' entsprechen oder auch etwas kleiner sein. Jedes seitliche Pufferelement 92 ist - vgl. Fig. 17 - als Gegenanschlag zu dem Anschlagflansch 83c an der entsprechenden Seitenwand 83 des kleineren Abdeckelements 81 ausgebildet, und es begrenzt die Relativbewegung dieser beiden benachbarten Abdeckelemente 81, 81' in Auszugsrichtung der Teleskopabdeckung.

Demgegenüber ist an der rückwärtigen Kante 90b der starren Befestigungsleiste 90 im Bereich der Deckwand 82' des größeren Abdeckkastens 81' kein Pufferelement vorgesehen, sondern zwischen dem nach außen vorragenden Stegflansch 84a der Materialverformung 84 in der Deckwand 82 des kleineren Abdeckkastens 81 und dieser rückwärtigen Kante 90b der Befestigungsleiste 90 ist im vollkommen auseinandergezogenen Zustand der beiden Abdeckkästen 81 und 81' ein pufferfreier Abstand (lichter Spielraum) A vorhanden. Zu diesem Zweck ist die Breite B der Pufferelemente 92 an den Seitenwänden 82' (in Längsrichtung der Abdeckung betrachtet) so groß gehalten, daß im vollkommen auseinandergezogenen Zustand der beiden jeweils einander benachbarten Abdeckkästen ein Mindestabstand zwischen der rückwärtigen Kante 90b der Befestigungsleiste 90 und der Stegwand 84a gewährleistet ist. Dies kann im übrigen auch durch eine entsprechend große Abmessung geschaffen werden, um die der Anschlagflansch 83c rückwärts gegenüber dem Stegflansch 84a vorsteht.

Durch die Anordnung und das Zusammenwirken der seitlichen Anschlagflansche 83c und Pufferelemente 92 nur im Bereich der Seitenwände zweier einander benachbarter und teleskopartig zusammenwirkender Abdeckkasten ergibt sich in äußerst vorteilhafter und zuverlässiger Weise ein vollkommen verkantungsfreier Auszug der jeweils einander benachbarten Abdeckkästen (Abdeckelemente) einer Teleskopabdeckung. Hierbei können ferner die an den rückwärtigen Stirnenden der Seitenwände jedes Abdeckkastens vorgesehenen Führungsvorsprünge 83d zu einer äußerst zuverlässigen Längsführung beitragen.

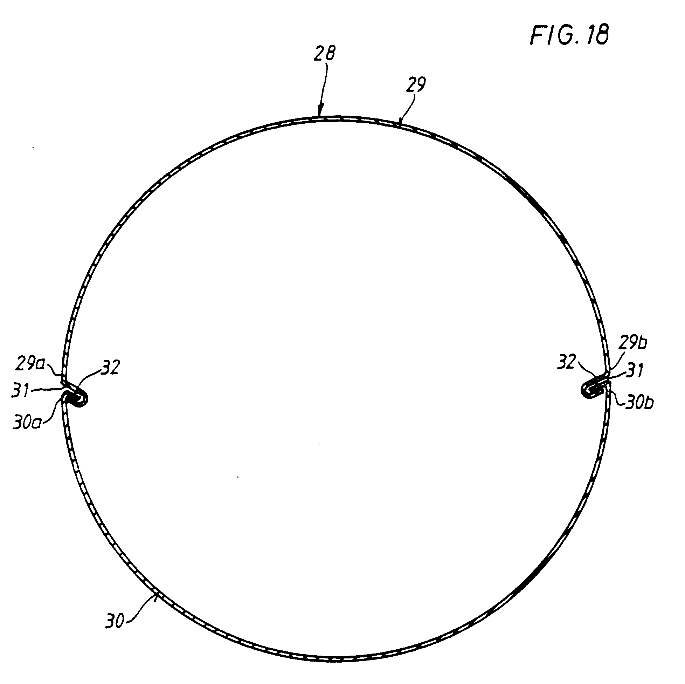

Die erfindungsgemäße Teleskopabdeckung kann jedoch nicht nur für flache oder prismenartige Führungsbahnen von Werkzeugmaschinen verwendet werden, wozu die bisher beschriebenen abgekanteten und im wesentlichen trogförmig ausgebildeten Abdeckkasten bestimmt sind, sondern sie kann auch zur Abdeckung einer Säule, einer Spindel oder dgl., insbesondere von Werkzeugmaschinen, vorgesehen werden. Im letzteren Fall wird eine Säule, Spindel oder dgl. dann etwa nach Art eines geschlossenen Teleskoprohres von dieser Teleskopabdeckung bei entsprechend angepaßter Länge umgeben. Für diese Art der Abdeckung dienen die nachfolgend anhand der Fig. 18 - 20 beschriebenen Ausführungsbeispiele.

Fig. 18 zeigt einen Querschnitt durch ein etwa kreisringförmig eine - nicht dargestellte - Säule, Spindel oder dgl. umgebendes, rohrartiges Abdeckelement 28, das in zwei, vorzugsweise etwa hälftige Abdeckhalbschalen, nämlich eine erste Abdeckhalbschale 29 und eine zweite Abdeckhalbschale 30 unterteilt ist. Die erste Abdeckhalbschale 29 weist an ihren beiden Teilungslängskanten 29a und 29b je eine längsverlaufende, rippenförmige, im Querschnitt etwa U-förmige Materialverformung in Form einer zur Außenseite hin offenen Rinne 31 auf, während die zweite Abdeckhalbschale 30 an ihren beiden Teilungslängskanten 30a bzw. 30b je eine längsverlaufende, im Querschnitt etwa hakenförmig nach innen gebogene Abkantung 32 aufweist. Die nach außen hin offenen Rinnen 31 an den Teilungslängskanten 29a und 29b der ersten Abdeckhalbschale 29 und die Hakenabkantungen 32 an den Teilungslängskanten 30a und 30b der zweiten Abdeckhalbschale 30 sind dabei so ausgebildet und angeordnet, daß sie passend und formschlüssig sowie fest, jedoch lösbar ineinandergreifen. Hierbei ist es ferner zweckmäßig, wenn zumindest die an ihren Teilungslängskanten 29a, 29b mit den U-förmigen Rinnen 31 versehene eine Abdeckhalbschale 29, gegebenenfalls jedoch auch beide Halbschalen 29, 30 im Bereich ihrer Teilungslängskanten - im Querschnitt des rohrartigen Abdeckelements 28 betrachtet - eine nach außen gerichtete Vorspannung besitzen, wodurch ein zuverlässiger, formstabiler und doch leicht lösbarer Zusammenbau jedes so hergestellten Elements 28 gewährleistet ist.

Bei der zuvor geschilderten Ausführung eines rohrartigen Abdeckelements 28 bilden die nach außen hin offenen Rinnen 31 an den Teilungslängkanten 29a, 29b der einen Abdeckhalbschale 29 nicht nur die Eingriffselemente für die formschlüssige Verbindung der beiden Abdeckhalbschalen 29 und 30, sondern sie bilden gleichzeitig auch eine rippenartige Längsversteifung dieser Abdeckhalbschale 29 und damit letztlich auch des ganzen Abdeckelements 28. Es ist darüber hinaus leicht vorstellbar, daß alle anderen zu einer kompletten Teleskopabdeckung gehörenden rohrartigen Abdeckelemente gleichartig gestaltet sein können, wobei sie lediglich - zwecks Erzielung des teleskopartigen Aufbaus - vor allem im Durchmesser entsprechend größer oder kleiner ausgeführt sein werden.

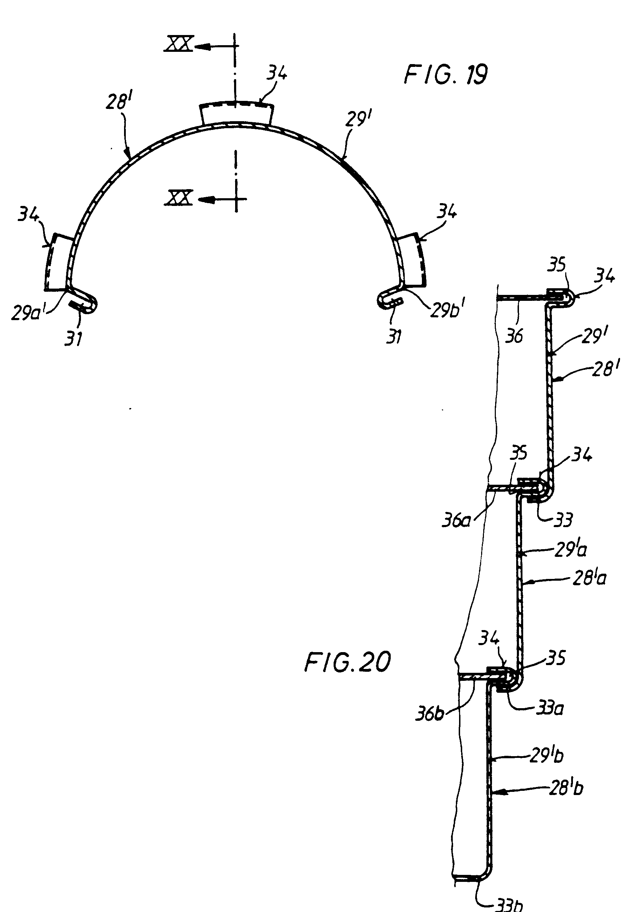

Ebenso wie bei den zuvor anhand der Fig. 1 bis 17 geschilderten Ausführungsformen ist es bei einer Teleskopabdeckung für eine Säule, Spindel oder dergleichen gemäß Beispiel der Fig.18 zusätzlich auch möglich, an zumindest einem Endabschnitt jedes Abdeckelements wenigstens eine rechtwinklig zur Längsrichtung verlaufende, U-förmige Materialverformung vorzusehen, die sich im Falle von rohrartigen Abdeckelementen nur über einen sinnvollen Teilabschnitt des Umfanges bzw. über praktikable Teilabschnitte dieses Umfanges erstreckt. Ein solches Ausführungsbeispiel sei nachfolgend anhand der Fig.19 und 20 erläutert.

Hierbei wird der Einfachheit halber davon ausgegangen, daß ein im Grundaufbau gleiches rohrartiges Abdeckelement 28′ wie im Beispiel der Fig.18 verwendet und nur entsprechend abgewandelt wird; aus diesem Grunde ist in Fig.19 auch lediglich eine etwa der Halbschale 29 in Fig.18 entsprechende Halbschale 29′ veranschaulicht, während Fig. 16 eine Teil-Längsschnittansicht (bei Schnittführung etwa gem. Linie XX-XX in Fig. 19) von drei teleskopartig gegeneinander verschiebbaren Abdeckelementen 28′, 28′a und 28′b zeigt.

Betrachtet man zunächst die Abdeckhalbschale 29′ des rohrartigen Abdeckelements 28′ in Fig.19, dann erkennt man hier wiederum die an den beiden Teilungslängskanten 29a′ und 29b′ vorgesehenen, längsverlaufenden U-förmigen Materialverformungen in Form je einer nach der Außenseite hin offenen Rinne 31 (gleichartig wie beim Beispiel der Fig.18).

Betrachtet man dann zusätzlich die Darstellung in Fig.20, dann erkennt man ferner, daß jedes rohrartige Abdeckelement 28′, 28′a, 28′b, und zwar hier insbesondere die entsprechende Abdeckhalbschale 29′, 29′a bzw. 29′b, an seinem einen Stirnende (in Fig.20 jeweils am unteren Stirnende) einen querverlaufenden, etwa rechtwinklig nach innen gerichteten (abgebogenen) Endflansch 33, 33a, 33b und an seinem entgegengesetzten Stirnende (in Fig20 jeweils am oberen Stirnende) über den Umfang verteilt mehrere kurze, querverlaufende, nach außen vorstehende, im Querschnitt U-förmige Materialverformungen 34 aufweist, die alle gleichartig ausgebildet sowie gleich groß sind und eine nach innen offene Rinne 35 bilden. Die Länge jeder Materialformung 34 in Umfangsrichtung des zuaehörigen Abdeckelements ist so gewählt, daß sich der gewünschte U-Querschnitt durch eine geeignete Verformung (z. B. Mehrfachabkantung

eines entsprechenden einstückigen Lappens am Abdeckelementende einfach erzielen läßt. Gemäß der Ausführungsform in Fig.19 kann jede Halbschale 29′, 29′a, 29′b etwa drei gleichmäßig über den Umfang verteilte Materialverformungen 34 aufweisen.

Alle U-förmigen Materialverformungen 34 am entsprechenden Abdeckelement 28′, 28′a, 28′b können - genau wie in den vorhersehenden Beispielen - zur Aufnahme einer zugehörigen Rückwand 36, 36a bzw. 36b ausgebildet sein, wie es in Fig.20 angedeutet ist, wobei diese Rückwände in den in ihrer Weite genau angepaßten Rinnen 35 der Materialverformungen 34 aufgenommen sind. Darüber hinaus können diese U-förmigen Materialverformungen 34 selbstverständlich auch - zusätzlich oder allein - einen Auszugs-Begrenzungsanschlag im Zusammenwirken mit dem entsprechenden Endflansch 33, 33a...des nächstfolgenden Abdeckelements bilden und/oder auch zur Aufnahme von geeigneten Gleitern oder dergleichen dienen.

Bei allen geschilderten Ausführungsformen können die Abdeckelemente und ihre Teile vollkommen aus Metallblech oder Kunststoff oder aus einer sinnvollen Kombination dieser Materialien hergestellt sein. Außerdem sei nochmals betont, daß die Materialverformung jedes Abdeckelements auch mit ganz engem U-Querschnitt ausgebildet, d.h. gewissermaßen zugepreßt bzw. flachgepreßt und gegebenenfalls auch mit Abdichtungsmaterial ausgestattet und an manchen Stellen sogar flachgelegt sein kann, und zwar jeweils vor allem dann, wenn diese Materialverformung als Versteifung der zugehörigen Fläche gedacht ist. Vor allem bei besonders hohen Seitenwänden von trog- bzw. rinnenförmigen Abdeckelementen können auch diese Seitenwände entsprechende Materialverformungen aufweisen. Die Hbdeckelemente selbst können jede geeignete und zweckmäßige Querschnittsform besitzen, um sie besonders günstig dem Querschnitt des zu schützenden Teiles anzupassen.

Bei den der Erfindung zugrundeliegenden Versuchen hat es sich als besonders vorteilhaft erwiesen, wenn die dem Querschnitt U-förmigen Materialverformungen bei ihrer Anfertigung durch eine Mehrfachabkantung in der Weise aus dem vorbereiteten rohen Blechzuschnitt hergestellt werden, daß eine Art Vorbiegekante einer Abkantmaschine zunächst auf den zu bildenden Boden einer durch die U-förmige Materialverformung zu bildenden Rinne einwirkt und eine Vorverformung in der Weise durchführt, daß die sich einander gegenüberliegenden seitlichen Stegteile (Stegwandabschnitte) der fertigen Rinne bzw. Materialverformung zunächst nur soweit abgebogen werden, daß sie einen Winkel von etwa 30° einschließen. Dann wird zwischen diese beiden gegenüberliegenden Stegteile und auf den Boden der zu bildenden Rinne eine Leiste bzw. ein Blechstreifen hochkant eingelegt, dessen Materialdicke der lichten Rinnenbreite der fertigen Rinne entspricht, worauf dann die beiden gegenüberliegenden Stegteile gegen die Seitenwände des eingelegten Blechsteifens gedrückt werden (bei gleichzeitigem Druck des Blechstreifens auf den Rinnenboden). Wenn dann der seitliche Biegedruck auf die Stegteile aufgehoben wird, dann federn diese beiden Steigteile geringfügig zurück, so daß dadurch der eingelegte Blechstreifen problemlos entnommen werden kann. Auf diese Weise ergibt sich eine verhältnismäßig maßgenaue und äußerst rasch herzustellende Mehrfachabkantung für die Herstellung der U-förmigen Materialverformungen.

**Patentansprüche**

1. Teleskopabdeckung, insbesondere für Werkzeugmaschinen, bestehend aus einer Anzahl von teleskopartig gegeneinander verschiebbaren Abdeckelementen (41), die jeweils eine Deckwand (42) und zwei mit der Deckwand aus einem einzigen Blechzuschnitt (41a) durch Abkantung hergestellte Seitenwände (43) aufweisen, wobei über die Ebene der Deckwand (42) ein mit dem nächstgrößeren Abdeckelement als Anschlag zusammenwirkender Flansch (44a) vorsteht, der gleichfalls aus dem einzigen Blechzuschnitt (41a) durch Abkantung hergestellt ist,
gekennzeichnet durch folgende Merkmale:
   a) am rückwärtigen Ende der einzelnen Abdeckelemente (41) ist eine rechtwinklig zur Längsrichtung des Abdeckelementes verlaufende U-förmige Materialverformung (44) vorgesehen, die in das Innere des Abdeckelementes hineinragt und eine sich fortlaufend über die Deckwand (42) und die beiden Seitenwände (43) erstreckende Rinne (45) bildet;
   b) die rückwärtige Begrenzung dieser Rinne (45) wird durch den Flansch (44a) gebildet;
   c) die für die U-förmige Materialverformung (44) bestimmte Zone (44a, 44b, 44c) des Blechzuschnitts (41a) weist im Übergangsbereich zwischen Deckwandabschnitt (42a) und Seitenwandabschnitt (43a) eine Ausklinkung (46) auf, deren Kanten nach Abkantung des Blechzuschnitts stumpf aneinander anliegen und in diesem Zustand miteinander verschweißt sind.

2. Teleskopabdeckung nach Anspruch 1, dadurch gekennzeichnet, daß die im Querschnitt U-förmige Materialverformung durch eine Mehrfachabkantung gebildet ist.

3. Teleskopabdeckung nach Anspruch 2, dadurch gekennzeichnet, daß - in Längsrichtung der Teleskopabdeckung betrachtet - zumindest an einem Endabschnitt jedes Abdeckelements (1, 1', 13, 41, 51, 61, 71, 28, 28') wenigstens eine rechtwinklig zur Längsrichtung verlaufende, U-förmige Materialverformung (4, 7, 9, 16, 17, 44, 54, 64, 74, 31, 34) unter Ausbildung einer offener Rinne (5, 8, 18, 19, 31, 35) vorgesehen ist, die sich zumindest über Teilabschnitte der Deckwand- und der Seitenwandbereiche (2, 3) des Abdeckelements erstreckt.

4. Teleskopabdeckung nach Anspruch 3, dadurch gekennzeichnet, daß die U-förmige Materialverformung (4, 17, 34) nach der Außenseite des Abdeckelements (1, 1', 13, 28') vorsteht und daß die dadurch gebildete Rinne (5, 18, 35) zum Innern des Abdeckelements offen und zur Aufnahme einer Rückwand (6, 36, 36a, 36b) oder einer abdichtenden und aussteifendenden Eckverbindung (20) für dieses Abdeckelement angepaßt ist.

5. Teleskopabdeckung nach Anspruch 3, dadurch gekennzeichnet, daß an einem Endabschnitt jedes Abdeckelements (1, 1', 13) zwei unmittelbar aneinander angrenzende, zumindest teilweise nach der Außenseite des Abdeckelements vorstehende Materialverformungen (4, 7, 16, 17) unter Ausbildung von U-förmigen Rinnen (5, 8, 18, 19) vorgesehen sind, von denen die eine Rinne (5, 19) nach innen offen und zur Aufnahme einer Rückwand (6) oder einer Eckverbindung (20) ausgebildet ist, während die andere Rinne (8, 18) nach außen offen ist und eine Abführrinne für Flüssigkeit, Späne und andere Materialien bildet.

6. Teleskopabdeckung nach Anspruch 3, wobei jedes Abdeckelement etwa in Form eines sich in Längsrichtung der Teleskopabdeckung erstreckenden Troges ausgebildet und aus einem einzigen Blechzuschnitt mit einer Deckwand und zwei winklig zur Deckwand abgekanteten Seitenwänden hergestellt ist, dadurch gekennzeichnet, daß an wenigstens einem Ende des rohen Blechzuschnittes (41a, 51a, 61a, 71a) Ausklinkungen (46, 55, 65, 75) in der Form und Größe vorgesehen sind, daß nach Herstellung aller Abkantungen wenigstens einige Ausklinkungskanten zur Bildung einer Eckverbindung stumpf aneinander anliegen.

7. Teleskopabdeckung nach Anspruch 6, dadurch gekennzeichnet, daß jede U-förmige Materialverformung (44, 54, 64, 74) unter Bildung einer nach außen offenen Rinne zum Innern des zugehörigen Abdeckelements (41, 51, 61, 71) hin vorsteht und daß der rohe Blechzuschnitt (41a, 51a, 61a, 71a) in jedem Übergangsbereich von der Deckwand (42, 52, 62, 72) zu einer Seitenwand (43, 53, 63) einer durch Mehrfachabkantungen zu bildenden U-förmigen Materialverformung (44, 54, 64, 74) eine dem Verlauf der Rinne angepaßte Materialausklinkung (46, 55, 65, 75) aufweist.

8. Teleskopabdeckung nach Anspruch 7, dadurch gekennzeichnet, daß die durch die Materialverformung (54, 64) gebildete Rinne über die ganze Deckwand (52, 62) verläuft und durch die Seitenwände (53, 63) offen ausmündet.

9. Teleskopabdeckung nach Anspruch 8, dadurch gekennzeichnet, daß an den beiden Seitenwänden (53) des Abdeckelements (51) je ein im Querschnitt gleich großer, durch die Materialverformung (54) gebildeter Rinnenabschnitt (54') wie an der Deckwand (52) ausgebildet ist, wobei die Rinnenabschnitte (54') in den beiden Seitenwänden (53) stumpf gegen die Unterseite vom Rinnenboden (54c) des in der Deckwand vorgesehenen Rinnenabschnittes stoßen.

10. Teleskopabdeckung nach Anspruch 7, dadurch gekennzeichnet, daß die durch die Materialverformung (44) gebildete Rinne (45) sich quer über die ganze Deckwand (42) und die beiden Seitenwände (43) fortlaufend erstreckt.

11. Teleskopabdeckung nach Anspruch 7, dadurch gekennzeichnet, daß die Deckwand (72) des Abdeckelements (71) etwa in ihrem mittleren Querbereich eine in Längsrichtung der Abdeckung verlaufende, dachfirstartige Abkdickung (73) aufweist und daß der rohe Blechzuschnitt (71a) an dem die U-förmige Materialverformung (74) aufweisenden Ende für diese Deckwand sowie im Bereich der hier auszubildenden Rinne eine weitere Materialausklinkung (75) aufweist, die dem Abknickungsverlauf dieses Rinnenabschnittes angepaßt ist.

12. Teleskopabdeckung nach Anspruch 3, wobei jedes Abdeckelement etwa in Form eines sich in Längsrichtung der Teleskopabdeckung erstreckenden Troges ausgebildet und aus einem einzigen Blechzuschnitt mit einer Deckwand und zwei winklig zur Deckwand abgekanteten Seitenwänden hergestellt ist,

gekennzeichnet durch die Kombination folgender Merkmale:

a) an wenigstens einem Ende weist jedes Abdeckelement (81) eine U-förmige Materialverformung (84) auf, die von der Deckwand (82) zum Innern dieses Abdeckelements hin vorsteht, eine nach außen offene Rinne (85) bildet und dabei einen die Stirnseite der Deckwand (82) bildenden Stegflansch (84a) aufweist, der über die Ebene der Deckwand (82) dieses Abdeckelements nach außen vorragt;

b) der rohe Blechzuschnitt (81a) besitzt in jedem Übergangsbereich von der Deckwand (82) zu einer Seitenwand (83) des zu bildenden Abdeckelements (81) sowie im Bereich der auszubildenden Materialverformung (84) wenigstens eine dem Verlauf und dem Querschnitt der Rinne (85) angepaßte Materialausklinkung (86, 87), deren Kanten nach Herstellung der Mehrfachabkantungen zumindest teilweise unter Bildung einer verschweißbaren Eckverbindung aneinanderliegen.

13. Teleskopabdeckung nach Anspruch 12, gekennzeichnet durch folgende weitere Merkmale:

a) jedes über einem nächstkleineren Abdeckelement (61) teleskopartig verschiebbar angeordnete Abdeckelement (81') trägt an der Unterseite (81'b) seines der Materialverformung entgegengesetzten vorderen Stirnendes (81c) einen in einer starren Befestigungsleiste (90) gehaltenen elastischen Abstreifer (91), der sich quer über die Innenseiten der Deckwand (82') und der beiden Seitenwände (83') erstreckt und der durch eine schräg vorstehende Abstreiflippe (91a) mit den Außenseiten der Deckwand (82) und der entsprechenden Seitenwände (83) des nächstkleineren Abdeckelements (81) in Gleitberührung steht;

b) die beiden Seitenwände (83) des jeweils kleineren Abdeckelements (81) weisen an dem mit der Materialverformung (84) versehenen hinteren Stirnende dieses Abdeckelements je einen etwa rechtwirklig nach außen abgekanteten Anschlagflansch (83c) auf;

c) an den Innenseiten der beiden Seitenwände (83') des jeweils nächstgrößeren Abdeckelements (81') sowie unmittelbar an der Abstreiflippe (91a) entgegengesetzten rückwärtigen Kanten (90a) der entsprechenden Befestigungsleistenabschnitte sind elastische Pufferelemente (92) befestigt, die als Gegenanschläge zu den Anschlagflanschen (83c) der Seitenwände (83) des nächstkleineren Abdeckelements (81) ausgebildet sind und die Relativbewegung zweier benachbarter Abdeckelemente (81, 81') in Auszugsrichtung der Teleskopabdeckung begrenzen, wobei zwischen dem nach außen vorragenden Stegflansch (84a) der Materialverformung (84) in der Deckwand (82) des nächstkleineren Abdeckelements (81) und der rückwärtigen Kante (90b) der an der Unterseite der Deckwand (82') des nächstgrößeren Abdeckelements (81') angebrachten Befestigungsleiste (90) im vollkommen auseinandergezogenen Zustand der beiden benachbarten Abdeckelemente ein freier Abstand (A) vorhanden ist.

14. Teleskopabdeckung nach Anspruch 13, dadurch gekennzeichnet, daß die beiden Seitenwände (83) jedes Abdeckelements (81) an ihren der Teleskop-Auszugsrichtung entgegengerichteten Stirnenden sowie im Bereich ihrer der Deckwand (82) abgewandten freien Ränder (83a) je einen geradlinig nach rückwärts weisenden Führungsvorsprung (83d) besitzen, der ebenfalls durch eine entsprechende winklige Abkantung des rohen Blechzuschnitts (81a) hergestellt ist.

15. Teleskopabdeckung nach Anspruch 2 und/oder 3, wobei sie zur Abdeckung einer Säule, Spindel oder dergleichen vorgesehen ist, die sie nach Art eines geschlossenen Teleskoprohres umgibt, dadurch gekennzeichnet, daß jedes rohrartige Abdeckelement (28, 28') in zwei Abdeckhalbschalen (29, 30, 29') unterteilt ist, von denen die eine an ihren beiden Teilungslängskanten (29a, 29b) je eine längsverlaufende, U-förmige Materialverformung in Form einer zur Außenseite hin offenen Rinne (31) und von denen die andere Abdeckhalbschale (30) an ihren beiden Teilungslängskanten (30a, 30b) je eine längsverlaufende, im Querschnitt hakenförmig nach innen gebogene Abkantung (32) derart aufweist, daß die U-förmigen Materialverformungen und die hakenförmigen Abkantungen formschlüssig ineinandergreifen, wobei zumindest die an ihren Längskanten mit den U-förmiger Materialverformungen (31) versehene eine Abdeckhalbschale (29) im Bereich ihrer Teilungslängsskanten - im Querschnitt des rohrartigen Abdeckelements betrachtet - eine nach außen gerichtete Vorspannuns besitzen.

16. Teleskopabdeckung nach Anspruch 15, dadurch gekennzeichnet, daß jedes rohrartige Abdeckelement (28', 28'a, 28'b) an seinem einen Stirnende einen querverlaufenden, nach innen gerichteten Endflansch (33, 33a, 33b) und an seinem entgegengesetzten Stirnende über den Umfang verteilt mehrere kurze, querverlaufende, nach außen vorstehende, im Querschnitt U-förmige Materialverformungen (34) aufweist, die zur Aufnahme einer Rückwand (36, 36a, 36b) für das zugehörige Abdeckelement ausgebildet sind und/oder im Zusammenwirken mit dem Endflansch eines benachbarten Abdeckelements einen Auszugs-Begrenzungsanschlag bilden.

## Claims

1. Telescopic cover, particularly for machine tools, consisting of a number of cover elements which can be pushed telescopically towards one another and each have a top wall (42) and two side walls (43) which are produced with the top wall from one single sheet material blank (41a) by bending, wherein a flange (44a), which co-operates with the next larger cover element as a stop, projects over the plane of the top wall (42) and is also produced from the single sheet material blank (41a) by bending, characterised by the following features:

    a) at the rear end of the individual cover elements (41) a U-shaped material deformation (44) is provided which runs at right angles to the longitudinal direction of the cover element, protrudes into the interior of the cover element and forms a channel (45) which extends continuously over the top wall (42) and the two side walls (43);
    b) the rear limit of this channel (45) is formed by the flange (44a);
    c) the zone (44a, 44b, 44c) of the sheet material blank (41a) intended for the U-shaped material deformation has in the transition region between the top wall section (42a) and the side wall section (43a) a cut-out (46). the edges of which butt against one anothr after bending of the sheet material blank and are welded to one another in this state.

2. Telescopic cover as claimed in claim 1, characterised in that the arterial deformation which is U-shaped in cross-section is formed by multiple bending.

3. Telescopic cover as claimed in claim 1, characterised in that - viewed in the longitudinal direction of the telescopic cover - at least one U-shaped material deformation (4, 7, 9, 16, 17, 44, 54, 64, 74, 31, 34) running at right angles to the longitudinal direction is provided at least on one end section of each cover element (1, 1', 13, 41, 51, 61, 71, 24, 24') to form an open channel (5, 8, 18, 19, 31, 35) which extends at least over partial sections of the top wall and side wall regions (2, 3) of the cover element.

4. Telescopic cover as claimed in claim 3, characterised in that the U-shaped material deformation (4, 17, 34) projects towards the outer face of the cover element (1, 1', 13, 28') and that the channel (5, 18, 35) thus formed is open towards the interior of the cover element and is adapted to receive a rear wall (6, 36, 36a, 36b) or a sealed and reinforced corner connection (20) for this cover element.

5. Telescopic cover as claimed in claim 3, characterised in that two material deformations (4, 7, 16, 17) which are immediately adjacent to one another and project at least partially towards the outer surface of the cover element are provided on one end section of each cover element (1, 1', 13) forming U-shaped channels (5, 8, 18, 19), of which one channel (5, 19) is open towards the interior and is constructed to receive a rear wall (6) or a corner connection (20), whilst the other channel (8, 18) is open towards the exterior and forms a discharge channel for fluid, shavings and other materials.

6. Telescopic cover as claimed in claim 3, in which each cover element is constructed approximately in the form of a trough extending in the longitudinal direction of the telescopic cover and is produced from one single sheet material blank with a top wall and two side wells bent at an angle to the top wall, characterised in that on at least one end of the rough sheet material blank (41a, 51a, 61a, 71a) cut-outs (46, 55, 65, 75) are provided of such a shape and size that after all the bends have been produced at least some cut-out edges butt against one another to form a corner connection.

7. Telescopic cover as claimed in claim 6, characterised in that each U-shaped material deformation (44, 54, 64, 74) projects towards the interior of the appertaining cover element (41, 51, 61, 71), thus forming a channel which is open towards the exterior, and that the rough sheet material blank (41a, 51a, 61a, 71a) has a material cut-out (46, 55, 65, 75) which is adapted to the course of the channel in each transition region from the top wall (42, 52, 62, 72) to a side wall (43, 53, 63) of a U-shaped material deformation (44, 54, 64, 74) to be formed by multiple bending.

8. Telescopic cover as claimed in claim 7, characterised in that the channel formed by the material deformation (54, 64) runs over the entire top wall (52, 62) and opens through the side walls (53, 63).

9. Telescopic cover as claimed in claim 8, characterised in that a channel section (54') which is formed by the material deformation (54) and is of the same size in cross-section as on the top wall (52) is constructed on the two side walls (53) of the cover element (51), so that the channel sections (54') in the two side walls 153) butt against the underside of the channel base (54c) of the channel section provided in the top wall.

10. Telescopic cover as claimed in claim 7, characterised in that the channel (45) formed by the material deformation (44) extends continuously and transversely over the entire top wall (492) and the two side walls (43).

11. Telescopic cover as claimed in claim 7, characterised in that the top wall (72) of the cover element (71) has in its central transverse region a ridge-like kink (73) which extends in the longitudinal direction of the cover, and that the rough sheet material blank (71a) has a further material cut-out (75) which is adapted to the kinked course of this channel section on the end having the U-shaped material deformation (74) for this top wall and in the region of the channel to be constructed here.

12. Telescopic cover as claimed in claim 3, in which each cover element is constructed approximately in the form of a trough extending in the longitudinal direction of the telescopic cover and is produced from one single sheet material blank with a top wall and two side walls bent at an angle to the top wall, characterised by the combination of the following features:
    a) on at least one end each cover element (81) has a U-shaped material deformation (84) which projects from the top wall (82) towards the interior of this cover element, forms a channel which is open towards the exterior and has a flange (84a) which forms the end of the top wall (82) and projects over the plane of the top wall (82) of this cover element;
    b) the rough sheet material blank (81a) has in each transition region from the top wall (82) to a side wall (83) of the cover element (81) to be formed and in the region of the material deformation (84) which is to be constructed at least one material cut-out (86, 87) which is adapted to the course and the cross-section of the channel (85), the edges of the said material cut-out at least partially butting against one another to form a weldable corner connection after the multiple bends have been produced.

13. Telescopic cover as claimed in claim 12, characterised by the following further features:
    a) each cover element (81') which is arranged so as to be movable telescopically over a next smaller cover element (81) bears on the underside (81'b) of its front end (81c) opposite the material deformation an elastic scraper (91) which is held in a rigid fixing strip (90), extends transversely over the inner faces of the top wall (82') and the two side walls (83') and is in sliding contact with the outer faces of the top wall (82) and the corresponding side walls (83) of the next smaller cover element (81) by means of a scraping lip (91a) which projects at an angle;

b) each of the two side walls (83) of the smaller cover element (81) in each case has a stop flange (83c) which is bent outwards approximately at right angles on the rear end of this cover element provided with the material deformation (84);

c) on the inner faces of the two side walls (83') of the next larger cover element (81') in each case and immediately on the rearward edges (90a) of the corresponding fixing strip sections opposite the scraping lip (91a) buffer elements (92) are fixed which are constructed as counter-stops for the stop flanges (83c) of the side walls (83) of the next smaller cover element (81) and limit the relative movement of two adjacent cover elements (81, 81') in the direction of extending the telescopic cover, so that there is a free space (A) between the outwardly projecting flange (84a) of the material deformation (84) in the top wall (82) of the next smaller cover element (81) and the rearward edge (90b) of the fixing strip (90) attached to the underside of the top wall (82') of the next larger cover element (81') in the fully extended state of the two adjacent cover elements.

14. Telescopic cover as claimed in claim 13, characterised in that the two side walls (83) of each cover element (81) each have on their ends directed against the direction of extending the telescope and in the region of their free edges (83a) facing away from the top wall (82) a guide projection (83d) which points backwards in a straight line and is also produced by corresponding angled bending of the rough sheet material blank (81a).

15. Telescopic cover as claimed in claim 2 and/or 3, in which the telescopic cover is constructed for covering a column, spindle or the like, which surrounds it in the manner of a closed telescopic tube, characterized in that each tubular cover element (28, 28') is divided into two half cover shells (29, 30, 29'), one of these containing on each of its two dividing long edges (29a, 29b) a longitudinally extending U-shaped material deformation in the form of a channel (31) which is open towards the outside and the other of said half cover shells (30) containing on each of its two dividing long edges (30a, 30b) a longitudinally extending bend (32) which is hook-shaped in cross-section and is bent inwards, so that the U-shaped material deformation and the hook-shaped bends fit and engage in a form-locking manner, whereby at least the half cover shell (29) with the U-shaped material deformations (31) on its dividing long edges - viewed in the cross-section of the tubular cover element - are prestressed in the outward direction.

16. Telescopic cover as claimed in claim 15, characterized in that each tubular over element (28', 28'a, 28'b) contains on one end an end flange (33, 33a, 33b) running transversely and directed inwards and on its opposite end several short material deformations (34) which are distributed over the periphery, run transversely, protrude in the outside direction and are U-shaped in cross section and which are constructed to receive a rear wall (36, 36a, 36b) for the respective cover element and/or form an extension limiting stop in co-operation with the corresponding end flange of a succeeding cover element.

## Revendications

1. Chape télescopique de protection, en particulier pour machines-outil, se composant de plusieurs éléments de protection (41) déplaçables télescopiquement les uns par rapport aux autres et dont chacun comprend une cloison de couverture (42) et deux cloisons latérales (43) réalisées avec la cloison de couverture à partir d'un unqiue flan de tôle (41a) par repliage, une aile (44a) qui forme une butée coopérant avec l'élément de protection ayant les dimensions supérieures suivantes, étant saillante sur le plan de la cloison de couverture (42) et étant réalisée également par rabattement de l'unique flan de tôle (41a), caractérisé par les particularités suivantes :

a) un façonnage en étrier (44) orienté perpendiculairement à la direction de la longueur de l'élément de protection et prévu à l'extrémité arrière de chacun de ces derniers pénètre à l'intérieur de l'élément de protection et forme une rainure (45) qui se prolonge en continu sur la cloison de couverture (42) et les deux cloisons latérales (43) ;

b) la paroi arrière de cette rainure (45) est formée par l'aile (44a) ;

c) la zone (44a, 44b, 44c) du flan de tôle (41a) qui est destinée au façonnage en étrier (44) comporte à la transition entre la partie (42a) de la cloison de couverture et la partie (43a) de cloison latérale une entaille (46) dont les bords sont appliqués bout à bout les uns contre les autres après repliage du fond de tôle et à cet état sont soudés les uns aux autres.

2. Chape télescopique de protection selon la revendication 1, caractérisée en ce que le façonnage de section en étrier est formé par repliages multiples.

3. Chape télescopique de protection selon la revendication 2, caractérisée en ce qu'au moins un façonnage en étrier (4, 7, 9, 16, 17, 44, 54, 64, 74, 31, 34) perpendiculaire à la direction de la longueur et formant une rainure ouverte (5, 8, 18, 19, 31, 35) et prévu au moins à une extrémité - observée dans la direction de la longueur dans la chape télescopique de protection - de chaque élément de protection (1, 1', 13, 41, 51, 61, 71, 28, 28'), ladite rainure se prolongeant au moins sur certaines parties des régions de la cloison de couverture et des cloisons latérales (2, 3) de l'élément de protection.

4. Chape télescopique de protection selon la revendication 3, caractérisée en ce que le façonnage en étrier (4, 17, 34) est saillant vers le côté extérieur de l'élément de protection (1, 1', 13, 28') et en ce que la rainure (5, 18, 35) ainsi formée est ouverte vers l'intérieur de l'élément de protection et adaptée à loger une cloison arrière (6, 36, 36a, 36b) ou un joint d'angle (20) étanchéifiant et rigidifiant cet élément de protection.

5. Chape télescopique de protection selon la revendication 3, caractérisée en ce que deux façonnages (4, 7, 16, 17) immédiatement voisins, saillants au moins partiellement vers le côté extérieur de l'élément de protection et formant des rainures en étrier (5, 8, 18, 19) sont prévus à une extrémité de chaque élément de protection (1, 1', 13), l'une des rainures (5, 19) étant ouverte vers l'intérieur et conformée pour loger une cloison arrière (6) ou un joint d'angle (20), tandis que l'autre rainure (8, 18) est ouverte vers l'extérieur et forme une rainure d'évacuation de liquide, de copaux et d'autres matières.

6. Chape télescopique de protection selon la revendication 3, dont chaque élément de protection est réalisé approximativement en forme d'une auge orientée dans la direction de la longueur de la chape télescopique et produite à partir d'un unique flan de tôle avec une cloison de couverture et deux cloisons latérales rabattues de manière à inscrire un angle avec la cloison de couverture, caractérisée en ce que des entailles (46, 55, 65, 75) prévues à au moins une extrémité du flan brut de tôle (41a, 51a, 61a, 71a) ont une forme et des dimensions telles qu'après réalisation de tous les rabattements, au moins certaines des bords des entailles sont appliqués bout à bout les uns contre les autres pour former un joint d'angle.

7. Chape télescopique de protection selon la revendication 6, caractérisée en ce que chaque façonnage en étrier (44, 54, 64, 74) est saillant vers l'intérieur de l'élément correspondant de protection (41, 51, 61, 71) en formant une rainure ouverte vers l'extérieure et en ce que le flan brut de tôle (41a, 51a, 61a, 71a) comporte une entaille (46, 55, 65, 75) adaptée à la conformation de la rainure et réalisée à chaque transition de la cloison de couverture (42, 52, 62, 72) à une cloison latérale (43, 53, 63) d'un façonnage en étrier (44, 54, 64, 74) devant être formé par repliage multiple.

8. Chape télescopique de protection selon la revendication 7, caractérisée en ce que la rainure formée par le façonnage (54, 64) se prolonge sur la totalité de la cloison de couverture (52, 62) et débouche en s'ouvrant à travers les cloisons latérales (53, 63).

9. Chape télescopique de protection selon la revendication; 8, caractérisée en ce qu'un élément de rainure (54') formé par façonnage (54) est réalisé sur les deux cloisons latérales (53) de l'élément de protection (51) avec les mêmes dimensions en coupe transversale que sur la cloison de couverture (52), les éléments de rainure (54') situés dans les deux cloisons latérales (53) aboutissant bord à bord contre le côté inférieur du fond (54c) de l'élément de rainure prévu dans la cloison de couverture.

10. Chape télescopique de protection selon la revendication 7, caractérisée en ce que la rainure (45) formée par le façonnage (44) se prolonge en continu transversalement sur la totalité de la cloison de couverture (42) et des deux cloisons latérales (43).

11. Chape télescopique de protection selon la revendication 7, caractérisée en ce que la cloison de couverture (72) de l'élément de protection (71) comporte approximativement au milieu de sa largeur transversale un coude (73) en forme de faîte de toit orienté dans la Direction de la longueur de la chape et en ce que le flan brut de tôle (71a) comporte à l'extrémité comprenant le façonnage en étrier (74) une autre entaille (75) destinée à cette cloison de couverture ainsi que dans la région de la rainure à l'allure du coude de cet autre entaille étant adaptée à l'allure du coude de cet élément de rainure.

12. Chape téléscopique de protection selon la revendication 3, dont chaque élément de protection est approximativement en forme d'une auge orientée dans la direction de la longueur de la chape téléscopique et est réalisé à partir d'un unique flan de tôle avec une cloison de couverture et deux cloisons latérales rabattues de manière qu'elles inscrivent un angle avec la cloison de couverture, caractérisée par la combinaison des particularités suivantes:

a) chaque élément de protection (81) comporte à au moins une extrémité un façonnage en étrier (84) qui est saillant sur la cloison de couverture (82) vers l'intérieur de cet élément, qui forme une rainure (85) ouverte vers l'extérieur et comporte de plus une aile (84a) formant le côté extrême de la cloison de couverture (82) et saillante vers l'extérieur au-dessus du plan de la cloison de couverture (82) de cet élément de protection ;

b) le flan brut de tôle (81a) comporte à chaque transition de la cloison de couverture (82) à une cloison latérale (83) de l'élément de protection devant être formé (81) ainsi que dans la région du façonnage devant être réalisé (84) au moins une entaille (86, 87) adaptée à la conformation et à la section de la rainure (85) et dont les bords sont appliqués au moins partiellement les uns contre les autres après réalisation des repliages multiples de manière à former un joint d'angle pouvant être soudé.

13. Chape téléscopique de protection selon la revendication 12, caractérisée par les particularités suivantes :

a) chaque élément de protection (81') monté déplaçable télescopiquement sur une élément de protection (81) ayant les dimensions inférieures suivantes supporte sur le côté inférieur (81'b) de son extrémité frontale antérieure (81c), qui est opposée à celle du façonnage, un racloir élastique (91) monté dans une baguette rigide de fixation (90) et se prolongeant transversalement sur les côtés intérieurs de la cloison de couverture (82') et des deux cloisons latérales (83'), ce racloir étant en contact de glissement au moyen d'un talon racleur (91a), qui est obliquement saillant, avec les côtés extérieurs de la cloison de couverture (82) et les cloisons latérales correspondantes (83) de l'élément de protection (81) ayant les dimensions inférieures suivantes;

b) les deux cloisons latérales (83) de l'élément de protection (81) ayant les dimensions inférieures suivantes comportent une aile de butée (83c) rabattue à peu près à angle droit vers l'extérieur à l'extrémité frontale arrière de cet élément qui comporte le façonnage ;

c) des éléments tampons élastiques (92) sont fixés sur les côtés intérieurs des deux cloisons latérales (83') de chaque élément de protection (81') ayant les dimensions supérieures suivantes ainsi que directement sur les bords arrière (90a), situés à l'opposé du talon racleur (91a), des parties correspondantes de la baguette de fixation, ces éléments tampons élastiques formant des contre-butées pour les ailes de butée (83c) des cloisons latérales (83) de l'élément de protection (81) ayant les dimensions inférieures suivantes et limitant le mouvement relatif de deux éléments voisins de protection (81, 81') dans le sens de l'extension de la chape télescopique de protection, un espace libre (A) subsistant entre l'aile (84a) saillante vers l'extérieur du façonnage (84) de la cloison de couverture (82) de l'élément de protection (81) ayant les dimensions inférieures suivantes et le bord arrière (90b) de la baguette de fixation (90) montée sur le côté inférieur de la cloison de couverture (82') de l'élément de protection (81') ayant les dimensions supérieures suivantes lorsque les deux éléments voisins de protection sont à l'état dans lequel ils sont extraits au maximum l'un de l'autre.

14. Chape téléscopique de protection selon la revendication 13, caractérisée en ce que les deux cloisons latérales (83) de chaque élément de protection (81) comportent une protubérance rectiligne de guidage (83d) orientée vers l'arrière à l'extrémité frontale tournée dans le sens opposé à celui de la mise en extension télescopique ainsi que dans la région de leur bord libre (83a) tourné du côté opposé à celui de la cloison de couverture (82), chacune de ces protubérances de guidage étant également réalisée par rabattement angulaire correspondant du flan brut de tôle (81a).

15. Chape téléscopique de protection selon la revendication 2 et/ou 3, servant à couvrir une colonne, une broche ou analogue, qu'elle enveloppe dans la forme d'une tube télescopique fermée, characterisée en ce que chaque élément tubulaire de protection (28, 28') est subdivisé en deux demi-coques (29, 30, 29'), dont une première comporte sur chacun des deux bords longitudinaux de division (29a, 29b) un faconnage longitudinal en forme de nervure, en étrier et ayant la forme d'une rainure (31) ouverte vers l'extérieur, et dont l'autre demi-coque (30) comporte sur chacun des deux bords longitudinaux de division (30a, 30b) un rabattement (32) longitudinal replié vers l'intérieur et ayant en coupe transversale une forme de crochet de manière que les faconnages en forme de nervure et les rabattement en forme de crochet s'emboitent fixement par complémentarité de formes, dont au moins la demi-coque de protection (29) comportant les faconnages en étrier (31) sur ses bords longitudinaux de division - vue en coupe transversale de l'élément tubulaire de protection - présente une précontrainte orientée vers l'extérieur dans la région de leurs bords longitudinaux de division.

16. Chape télescopique de protection selon la revendication 15, charactérisée en ce que chaque élément tubulaire de protection (28', 28'a, 28'b) comporte à l'une des extrémités frontales un rebord transversal (33, 33a, 33b) orienté vers l'intérieur et, à l'extrémité frontale opposée, plusieurs faconnages courts (34) de section en étrier, aillants vers l'extérieur, qui sont tous réalisés pour loger une cloison arrière (36, 36a, 36b) pour l'élément de protection correspondant et/ou qui forment une butée de limitation de la mise en extension en coopération avec le rebord correspondant de l'élément suivant de protection.

EP 0 370 078 B1

FIG.1

FIG.2

FIG.3

18

## FIG.4

44a

46

44c

44

44b

41a

42a

43a

43b

## FIG.5

VI

41

42

47

44c

44

VI

44c

43

43b

## FIG.6

44a

45

41

42

44b

44

44c

43

43b

## FIG.7

55

54c

54

VIII

VIII

51a

52a

53a

## FIG.8

51

52

54a

54

54c

54'

53

FIG.9

FIG.10

FIG.12

FIG. 11

FIG. 13

*FIG. 14*

*FIG. 15*

FIG.16

FIG.17

*FIG. 18*

FIG. 19

FIG.20